Europäisches Patentamt

European Patent Office

Office européen des brevets

(11) Publication number: **0 056 661**
**A2**

## EUROPEAN PATENT APPLICATION

(21) Application number: 82101227.5

(22) Date of filing: 18.04.79

(51) Int. Cl.³: **B 29 C 24/00**
**B 65 H 35/00**

(30) Priority: 25.04.78 US 899848
23.10.78 US 953620

(43) Date of publication of application:
28.07.82 Bulletin 82/30

(84) Designated Contracting States:
BE CH DE FR GB IT LU NL SE

(60) Publication number of the earlier application
in accordance with Art. 76 EPC: 0 004 971

(71) Applicant: MARYLAND CUP CORPORATION
10100 Reisterstown Road
Owings Mills Maryland 21117(US)

(72) Inventor: Cress, Allan K.
112 Brandon Avenue
Baltimore Maryland 21212(US)

(72) Inventor: Busse, Charles E.
3616 Woodholme Drive
Jarretsville Maryland 21804(US)

(74) Representative: Selting, Günther, Dipl.-Ing. et al,
Deichmannhaus
D-5000 Köln 1(DE)

(54) Method and apparatus for manufacturing foam plastic containers by use of a tubular forming mandrel.

(57) The present invention is directed to an apparatus and method wherein preprinted rectangular blanks (10A) of longitudinally stretch-oriented foam sheet material are continuously formed into cylinders by a tubular forming mandrel (M) on which the blanks are folded, seamed and thereafter transferred onto final forming mandrels (FM). Subsequently, the blanks and the final mandrels are heated to shrink the blanks so that they assume the shape of the final forming mandrels. In forming containers, means are provided to place bottom blanks on the product mandrels prior to the loading of the cylinders thereon so as to shrink the cylinders to sidewall shapes overlying the bottom blanks. The top curl on containers such as drinking cups and food tubs is formed after shrink forming. Further, the bottom seam of the container may be reinforced by ironing after shrink forming. The bottom blanks are synchronously fed to the product mandrels at a compatible spacing and velocity after being initially blanked from a web at a different spacing and velocity achieving a minimum amount of scrap in the web.

./...

FIG. 1

-1-

## DESCRIPTION OF THE INVENTION

Title:    METHOD AND APPARATUS FOR MANUFACTURING FOAM
PLASTIC CONTAINERS BY USE OF A TUBULAR
FORMING MANDREL

### Field Of The Invention

This invention relates to a method and apparatus for
forming containers by use of a tubular forming mandrel and
more particularly, to a method and apparatus for forming
containers from heat-shrinkable material such as foamed
plastic sheets and the like.

### Background Of The Invention

It is known in the art to shrink form containers such
as drinking cups from preformed tubular lengths of circumferentially oriented thermoplastic material such as foamed
polystyrene.

One particularly desirable method of initially forming
a tubular length of such circumferentially oriented material
is to provide rectangular-preprinted blanks and wrap these
blanks around a mandrel whereon a heat-sealed seam is
effected longitudinally along the circumference of the
formed tubular length. The use of rectangular blanks
facilitates preprinting of patterns, designs, logos, etc.,
on the blanks such that the ultimate tubular lengths and
containers formed therefrom will bear the ultimately desired
indicia.

A further advantage of the rectangular blank is that it may be cut from an extruded sheet of thermoplastic or thermoplastic foam which is stretched longitudinally, i.e., in the most logical, natural and facile direction of stretch after extrusion, namely, the machine direction, to achieve the necessary circumferential orientation in a tubular length or cylinder formed from the rectangular blank.

Previous efforts to handle these rectangular blanks and form them into cylinders, however, have required relatively elaborate systems of transfer rollers, turrets with multiple mandrels thereon and vacuum systems to properly index leading and/or trailing edges of the rectangular blanks on the transfer rollers or mandrels.

It is extremely important in the manufacturing of disposable containers to maximize use of the container material. The bottom of a container is usually severed from a continuous web, thus incurring waste in the area of the continuous web between the severed blanks.

To maximize the use of the container material it is extremely essential that the bottom blanks be severed in close proximity to each other along the length of the continuous bottom blank web. Further, the cylindrical blanks which define the sidewalls of the container must also be severed from a second supply of material in such a manner to maximize use of the container material.

Apparatus for cutting and transferring bottom blanks from a continuous web should continuously transfer the severed bottom blank to the final forming mandrel or other work station at which the blank is to be utilized and at the same time minimize the waste of the bottom blank material web. Final forming mandrels utilized in the construction of disposable cups, for example, may be positioned along an endless chain and spaced from each other by a substantial distance. To minimize the waste of the bottom blank material web it is essential that the bottom blanks be severed in close proximity to each other. This gives rise to incompatible parameters, namely, a minimum spacing at the cutting station and a maximum spacing at the work station. As a consequence, there is a velocity disparity as well in a continuous feeding and forming process between web velocity at the cutter and the velocity of the transitory mandrels or other bottom blank receiving means at the work station at the point of transfer.

## Summary Of The Invention

A convolute roll of elongated preprinted stock of longitudinally oriented heat-shrinkable material such as polystyrene foam is unwound to feed the stock to a rotary cutter which severs the feed stock into rectangular blanks of substantially identical dimensions. The cut blanks are fed by feed belts on their longitudinal axes and subsequently fed on their transverse axes by means of pusher dogs through a preogressive series of forming rails adjacent a single elongated tubular forming mandrel until a tubular length or cylinder having a lapped side seam is formed about the tubular forming mandrel of each blank. In a first embodiment, a heated pressure belt may effect a heat-sealed side seam and discharges the cylinder from the tubular forming mandrel onto a final forming mandrel indexed to dwell in coaxial registry with the tubular forming mandrel and formed cylinder during the discharge of each cylinder from the tubular forming mandrel.

The final forming mandrels have bottom and sidewall defining portions and are shaped in cross-section like a desired ultimate container such as a cylindrical food can with a rounded bottom edge or a frustoconical drinking cup. A bottom blank may be placed on the final forming mandrels and held there by vacuum while the sidewall of the ultimate container, namely, the tubular length or cylinder is transferred from the initial forming mandrel onto the final forming mandrel.

Once both components of the basic container or cup are on a given final forming mandrel, each such final forming mandrel is constrained out of registry with the tubular forming mandrel and translated through a heat tunnel to shrink the cylinder or tubular length into conformity with the sidewall slope of the final forming mandrel to provide the desired container shape.

In all cases in the preferred embodiments of the present invention, the cylinders exceed the axial length of the final forming mandrels such that the bottom edge of the sidewall shrinks around the outer edges of bottom blank to provide a heat-sealable bottom seam. The final heat sealing is effected by any suitable heating means such as a conformally shaped contact heater.

Where a cup-shaped (frustoconical) container is desired, a final step in the process is the forming of a top curl or bead to increase the lateral stiffness of the container and ensure drinking comfort. In the case of a food container of a more conventional substantially cylindrical shape, the steps of filling and closing by the application of a suitable lid or closure represent the final steps.

The present invention further involves an apparatus and method for providing bottom blanks severed from a web feed roll in a compatible interface with the continuous container manufacturing process with a minimum amount of waste. The web feed roll is fed between a cutter drum and a first transfer turret so as to effect the severing of the bottom blanks from the web feed roll at a first velocity and apacing on said first turret. Thereafter, the first transfer turret transports the severed bottom blanks to a point where they are tangentially transferred to a second transfer turret at which point they are constrained to assume a second velocity and spacing compatible with the velocity and spacing of final container forming mandrels translating past the second transfer turret in the said continuous process.

The bottom blanks are then tangentially transferred to final forming mandrels. The diameter of the cutter drum is approximately one-half the diameter of the first transfer turret and approximately one-fourth the diameter of the second transfer turret, respectively, in a preferred embodiment of the invention. Therefore, the bottom blanks which are cut from the web feed roll are severed at a relatively high speed and in close proximity to each other because of the small diameter of the cutter drum and the close positioning of the cutter dies positioned around the circumference of the cutter drum while the blanks are delivered at a lower speed and wider spacing from the second transfer to the final forming mandrels.

Brief Description Of The Drawings

Figure 1 is a top-plan view of a blank handling, cylinder forming and cylinder transferring mechanism of the present invention;

Figure 2 is a side elevation of the feed roll, rotary cutter and right angle transfer belts of the present invention;

Figure 2A is a top-plan schematic illustrating the stretch orientation of cut rectangular blanks as they undergo the right angle transfer from the rotary cutter to the cylinder forming means of the present invention;

Figure 3 is an exploded schematic illustrating in correlated cross-section the various forming stages of the present invention in converting a rectangular blank into a cylinder by continuous movement of the blank along a fixed mandrel;

Figure 4 is a schematic side elevation of a forming mandrel drive, transfer station and forming oven of the present invention;

Figure 5A is a detail of a forming mandrel, mount and drive chain in side elevation;

Figure 5B is a top elevation of the detail of Figure 5A with an alternate form of forming mandrel shown in dotted lines therein;

Figure 6A is a cross-section of a frustoconical mandrel illustrating internal vacuum ports therein and a container formed thereon;

Figure 6B is a cross-section of a substantially cylindrical mandrel illustrating internal vacuum ports therein and a container formed thereon;

Figure 7 is a schematic of a cup-making system of the present invention;

Figure 8A is a top view of a vacuum distributor of the present invention;

Figure 8B is a side elevation in cross-section of the vacuum distributor of Figure 8A taken along line 8B-8B of Figure 8A;

Figure 9 is a top-plan view of bottom finishing, top curl forming and container ejection stations for cup-making equipment of the present invention together with a bottom blank feeding station;

Figure 10 is a cross-sectional view of the top curl forming station taken along line 10-10 of Figure 9;

Figure 10A is an enlarged view of the top curl tool;

Figure 11 is a cross-section of the bottom finishing station taken along line 11-11 of Figure 9;

Figure 11A is an enlarged cross-sectional illustration of a bottom iron engaging a container bottom on a mandrel of the present invention during bottom sealing;

Figure 11B is a top-plan view of the bottom iron of Figures 9, 10, 11 and 11A;

Figure 12 is a cross-section taken along line 12-12 of Figure 9;

Figure 13 is a schematic of a container filling station;

Figure 14 is a schematic of a filled container capping station;

Figure 15 is a schematic of a filled container capping station illustrating a different cap or lid from that illustrated in Figure 14;

Figure 16A is a top-plan view of a blank handling and cylinder forming mechanism of an embodiment of the present invention;

Figure 16B is a continuation of the top-plan view of a blank handling and cylinder forming mechanism as illustrated in Figure 16A;

Figure 16C is a continuation of a blank handling and cylinder forming mechanism as illustrated in Figures 16A and 16B and further illustrating the cylinder seating mechamism;

Figure 17A is a side elevation of the blank handling and cylinder forming mechanism as illustrated in Figure 16A;

Figure 17B is a side elevation of the blank handling and cylinder forming mechanism as illustrated in Figure 16B and further illustrating the cylinder heater;

Figure 17C is a side elevation of the blank handling and cylinder forming mechanism as illustrated in Figure 16C and further illustrating the seamer assembly;

Figure 18 is a cross-sectional view of the blank handling and cylinder forming mechanism shown in Figures 16A through 16C and illustrating in broken and solid lines the various positions of a blank as it is initially formed into a U-shape;

Figure 19 is a cross-sectional view of a blank handling and cylinder forming mechanism shown in Figures 16A through 16C illustrating the position of a blank prior to being engated by the seamer assembly as viewed from the outfeed end of the tubular forming mandrel;

Figure 20A is a top-plan view of a bottom blank handling apparatus according to the present invention;

Figure 20B is a continuation of the top-plan view of a bottom blank handling apparatus as illustrated in Figure 16A;

Figure 20C is a continuation of a bottom blank handling apparatus as illustrated in Figures 16A and 16B and further illustrating the bottom blank web feed mechanism;

Figure 21A is a side elevation of the bottom blank handling apparatus as illustrated in Figure 16A;

Figure 21B is a side elevation of the bottom blank handling apparatus as illustrated in Figure 16B;

Figure 21C is a side elevation of the bottom blank handling apparatus as illustrated in Figure 16C; and

Figure 22 is a side view of the rotary die and illustrating a partial cross-section view of the framework.

Detailed Description Of The Drawings

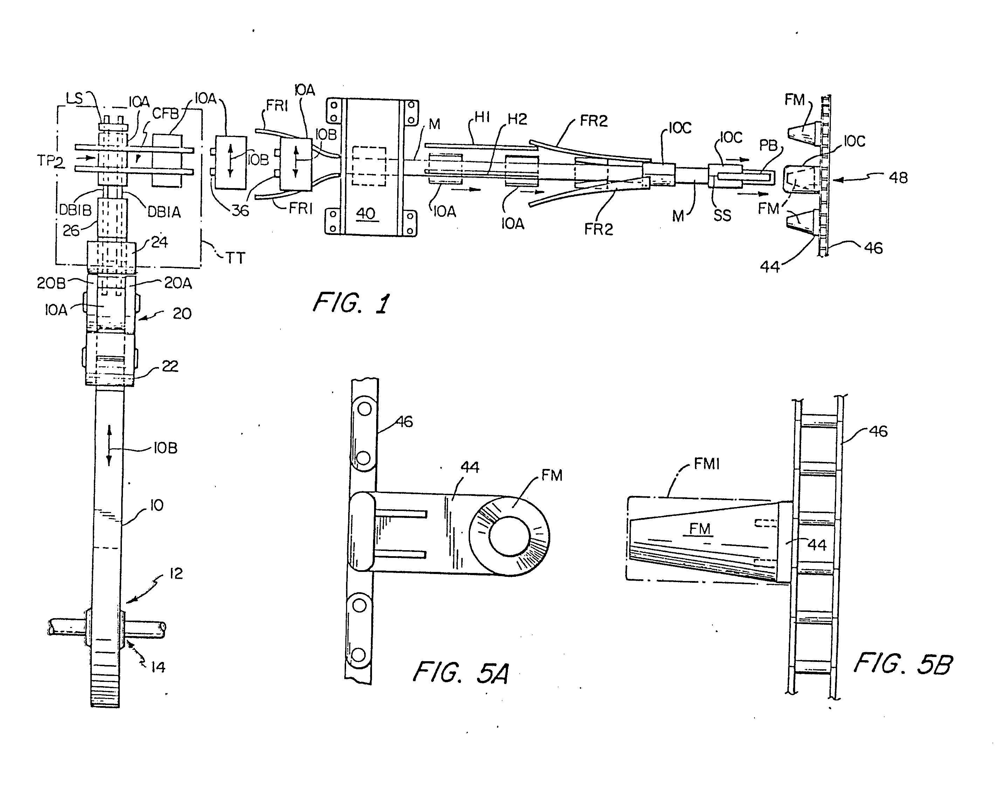

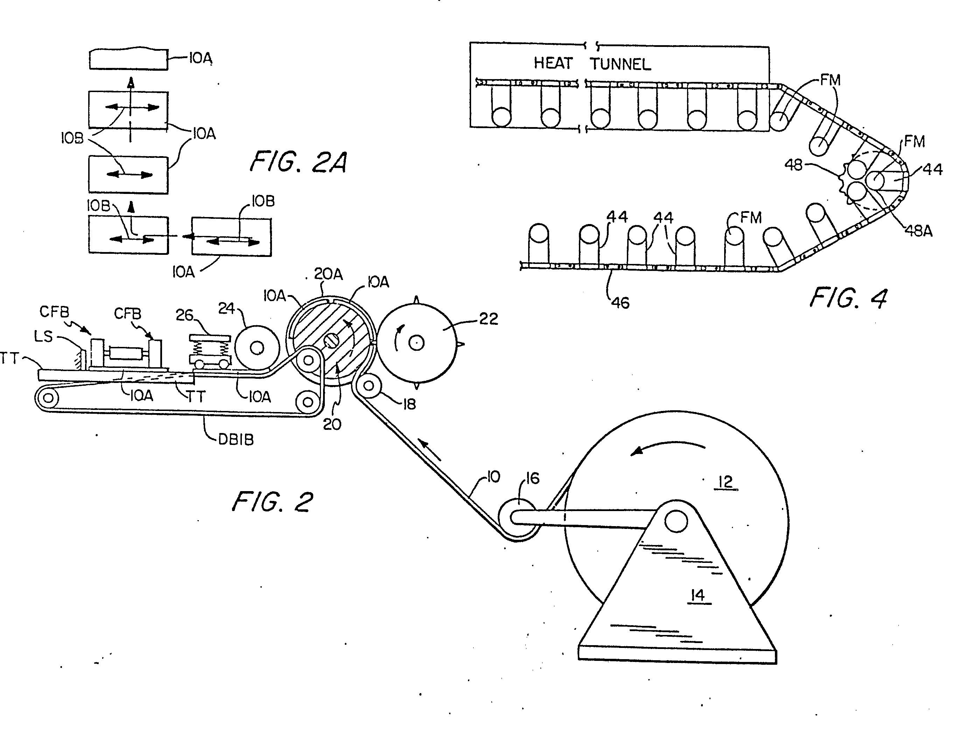

Referring to Figures 1 and 2, the material 10 from which the intermediate cylinders and ultimate containers are to be made is shown as an elongated strip convolutely wound in the form of a large supply roll 12 rotatably mounted on a suitable stanchion or support 14.

The feed material 10 is unwound from the supply roll 12 and passed beneath a tension roller 16 (Fig. 2) and a guide roller 18 into contact with a vacuum feed drum 20 which cooperates with a synchronized rotary cutter means 22 to sever the end of the feed material 10 into uniform rectangular blanks 10A.

The feed material 10 is stretch oriented for enhanced heat-shrink characteristics in the direction 10B which is parallel to the long dimension of the ultimate rectangular blanks 10A.

As the blanks 10A are released from the downstream side of the vacuum drum 20, the latter being flanged at 20A, 20B to contain the narrower width of the feed material 10 between the flanges 20A, 20B as shown in Figs. 1 and 2, an upper pinch roll 24 and blank bottom engaging pair of drive belts DB1A and DB1B entrain the leading edge of each successive blank 10A. Each blank 10A is fed on its longitudinal axis by the drive belts DB1A, DB1B beneath a biased retaining guide 26 to a right angle transfer point TP2.

At the transfer point TP2 a set of cross-feed belts CFB are located adjacent to limit stop means LS which abuts with and positions each rectangular blank 10A for lateral transfer by the said cross-feed belts CFB.

The drive belts DB1A and DB1B pass at an angle through suitable slots in the surface of a transfer table TT such that prior to engaging the limit stop LS the blanks 10A have been accelerated by and broken contact with the drive belts DB1A and DB1B.

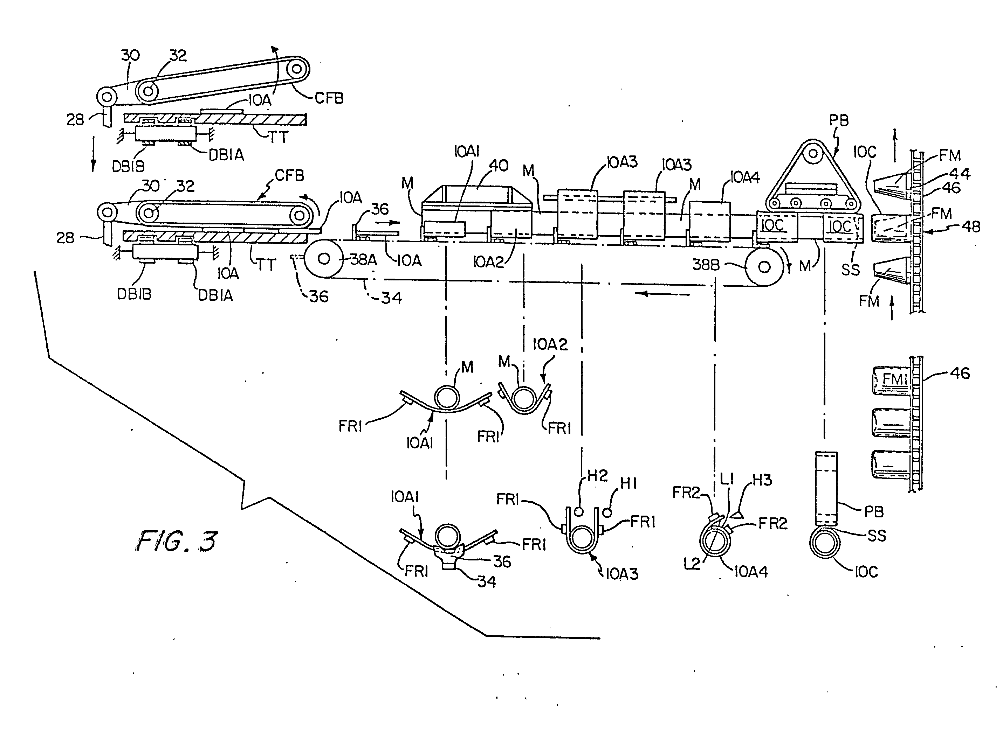

As shown in Fig. 3, the cross-feed belts CFB are mounted to pivot toward and away from the upper surface of the transfer table TT in synchronism with the forming of the rectangular blanks 10A and their delivery to the transfer point TP2. Thus, each said blank 10A will be transferred laterally of its longitudinal axis substantially instantaneously upon engaging the limit stop LS at the transfer point TP2.

The pivotal motion of the cross-feed belt assembly CFB is effected by means of a drag link 28 and crank arm 30 acting about a pivot point 32 as illustrated in Fig. 3.

The cross-feed belts CFB drive the blanks 10A off the transfer table TT onto a carrier chain 34 having pushers or dogs 36 thereon which engage the trailing edges of the blanks 10A and propel them along in a direction transverse to their longitudinal stretch orientation direction 10B.

Longitudinally disposed along the upper reach of the carrier chains 34 is a hollow tubular forming mandrel M which is fixed against rotation in a suitable holding bracket 40.

Loading into the bracket 40 and progressively varying in shape along substantially the entire extent of the forming mandrel M are opposed forming rails FR1, the extent of which can best be understood with reference to Figs. 1 and 3.

As the carrier chain 34 progresses clockwise around the chain drive sprockets 38A, 38B, the pusher dogs 36 move the blanks 10A through the forming rails FR1 to bend the blanks 10A in stages 10A1 into a U-shape 10A3 about the mandrel M with the legs of the U-shaped blank 10A3 being adjacent to elongated external and internal surface heaters H1 and H2, respectively, the "external" surface being the outer surface of the innermost lap L1 of a side seam and the "internal" surface being the inner surface of the outer lap L2 of the side seam as shown in the substantially cylindrical fold 10A4 of the blank 10A effected by means of folding rails FR2 downstream from the heaters H1, H2.

A heater H3, schematically shown in Fig. 3, can be utilized to provide additional heat such as radiation or forced hot air between the nearly juxtaposed laps L1 and L2.

When the cylindrical fold is completed the rectangular blank 10A has been converted into a cylinder 10C which exits the folding rails FR2 and passes under a pressure belt assembly PB which applies sufficient downward pressure on the laps L1-L2 to form a heat-sealed lapped side seam SS in the cylinder 10C while at the same time translating the cylinder 10C off the mandrel M and onto a finishing mandrel FM.

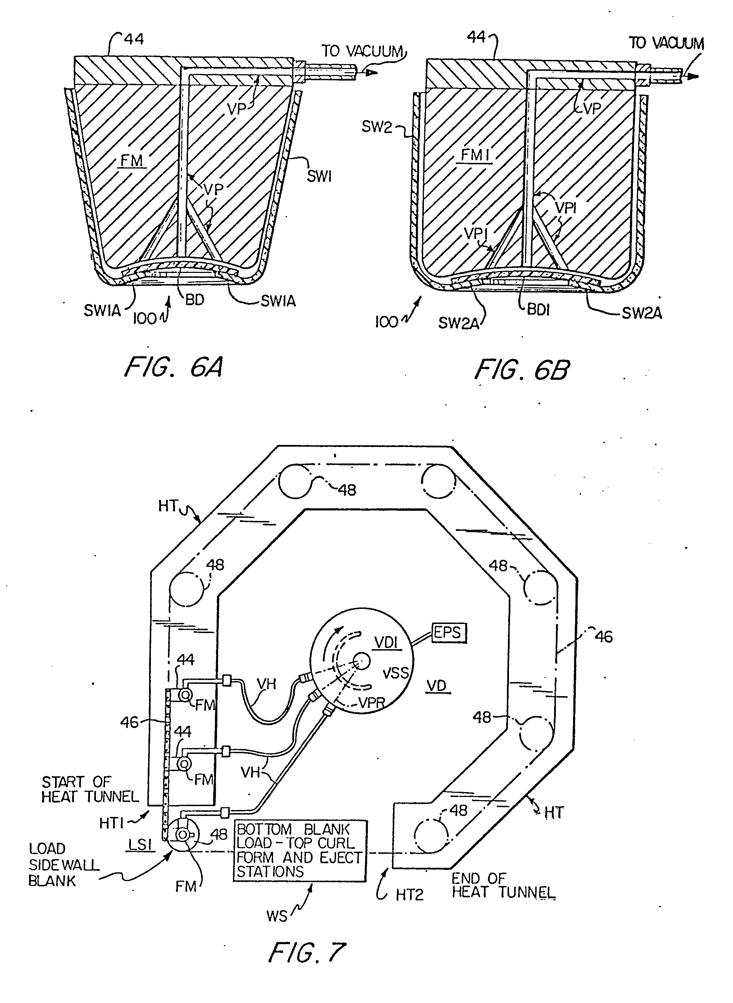

Referring to Figs 3, 5A and 5B, the finishing mandrels FM are shown in solid lines as having a frustoconical (drinking-cup) shape and in dotted lines as having a substantially cylindrical shape FM1 similar to that of pressurized aluminum beverage cans.

The finishing mandrels FM are mounted on one end of support arms 44 which are mounted at their other ends on a drive chain 46 which passes about a main transfer sprocket 48 adjacent the finish end of the elongated forming mandrel M. As shown in Figs. 1 and 3, the finished cylinders 10C are stripped from the forming mandrel M onto one of the finishing mandrels FM which is in substantially coaxial registry with the forming mandrel M.

This registry is achieved by proportioning the transfer sprocket 48 such that the arms 44 are radii thereof and place the finishing mandrels FM one-by-one at the dead center position 48A of the transfer sprocket 48 at the point of coaxial registry with the forming mandrel M. As a result, a time delay during which the finishing mandrel FM remains in such registry is effected, thereby permitting transfer of the cylinder 10C from the forming mandrel M onto the finishing mandrel FM. In another embodiment the registry of the finishing mandrel may be effected by synchronization of the discharge of the cylinder 10C from the forming mandrel M onto the finishing mandrel FM.

Once the cylinders are transferred onto the finishing mandrels FM they are conveyed on those mandrels through a suitable heat tunnel HT, the length of the latter and its temperature being correlated with the speed of the carrier chain 46 to shrink the cylinders to a frustoconical configuration or a cylindrical configuration depending upon the shape of the finishing mandrel FM or FM1.

The shrinkable sleeves SS are longer than the mandrels FM, FM1 so as to shrink beneath the bottom defining ends of the mandrels (provide the inturned bottom or curl) of a finished container.

For example, as shown in Fig. 6A, a frustoconical sidewall SW1 is produced by shrinking the sleeves SS on a frustoconical mandrel FM. A bottom blank BD is provided such that the inturned edges SW1A of the sidewall SW1 will overlap the bottom blank BD after forming the sidewall from the sleeve SS.

The mandrel FM is shown as including internal vacuum ports VP which extend to a vacuum connection VC on the mounting arm 44 of the mandrels as will be more fully described with reference to Fig. 7.

For a container of a more conventional cylindrical shape such as the cross-section of an aluminum beverage can or the like, reference is made to Fig. 6B in which a more cylindrical mandrel FM1 having vacuum ports VP1 is shown with a sidewall SW2 shrink formed thereon with inturned edges SW2A overlapping the periphery of a bottom blank BD1, the latter being initially held on the mandrel via the vacuum ports VP1.

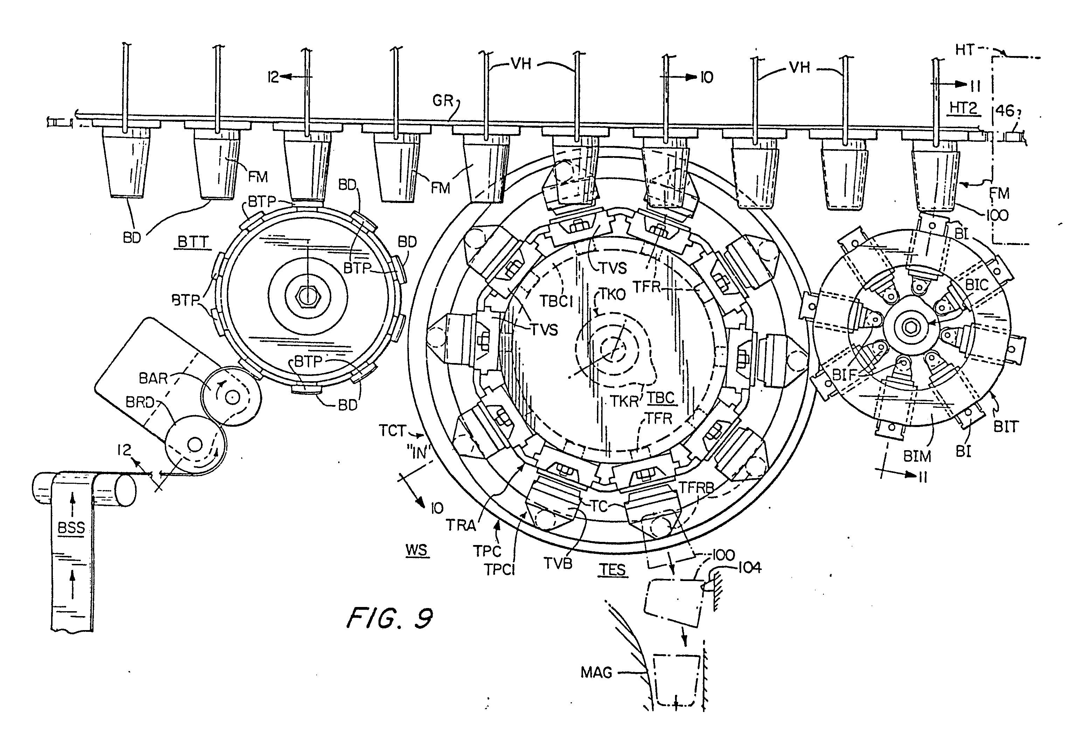

Referring now to Fig. 7, the finishing mandrels FM (provided with a bottom blank BD as shown in Fig 6A and to be more fully described with reference to Figs 9-11) are loaded with the shrinkable cylinders at a loading station LS1 in the manner previously defined in Figs. 1 - 6, and the mandrels FM bearing the sidewall blanks (SW1) are progressively transported through the heat tunnel HT from the entrance HT1 thereof to the exit HT2 on the carrier chain 46 over the drive sprockets 48.

When the mandrels FM leave the exit HT2 of the heat tunnel HT they are carrying formed cups or containers of the configuration shown in Figure 6A. These cups or containers are then subjected to bottom sealing and a top curl forming operation as will be described with reference to Figs. 9 - 11.

The bottom blanks BD (BD1) of Fig. 6A (6B) are held on the mandrels FM (FM1) by means of vacuum applied through vacuum hoses VH. The vacuum hoses VH are in communication with ports VP (VP1) through the support arms 44 and said mandrels.

A vacuum distributor VD is provided centrally of the arcuately disposed heat tunnel HT. All of the vacuum hoses VH are manifolded into the vacuum distributor VD.

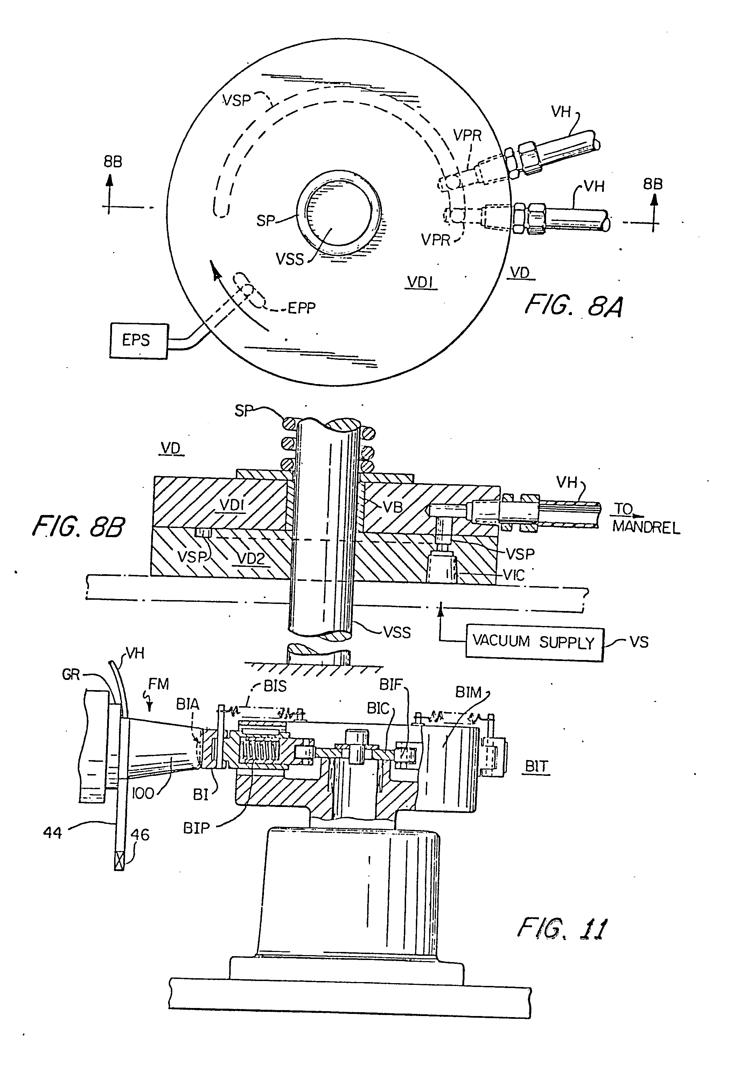

As further shown in Figs. 8A and 8B, the vacuum distributor VD includes a top rotor plate VD1 having a plurality of radially disposed vacuum ports VPR. Each of the vacuum hoses VH is connected to a vacuum port VPR which in turn is in communication with a circular locus in the rotor disc VD1 which corresponds in size to the radius of an arcuate vacuum supply port VSP in a fixed bottom plate VD2 through which an input coupling VIC is provided to connect the supply port VSP to a vacuum source VS.

As the mandrels FM travel through the heat tunnel HT, the rotor disc VD1 rotates on a bearing VB on a support shaft VSS and is held in sufficient sealed engagement therewith. The vacuum ports VPR in the rotary disc VD1 thus come into and out of registry with the vacuum supply port VSP in the support disc VD2 causing vacuum to be applied through the hoses VH to the vacuum ports VP (VP1) in the mandrels FM (FM1) to provide the suction required to hold the bottom blanks BD (BD1) in place on the said mandrels pending the shrink forming of the sidewall blanks SW1 (SW2) to overlap the bottom blanks BD (BD1) at the inturned portions SW1A (SW2A) of the said sidewall blanks.

The arcuate length and position of the vacuum supply port VSP are thus correlated with heat shrink process and extent of travel of the mandrels FM (FM1) in the heat tunnel HT from the time the bottom blanks BD (BD1) are loaded on the said mandrels until sufficient shrinkage of the sidewalls SW1 (SW2) has been achieved to hold the said bottom blanks in place.

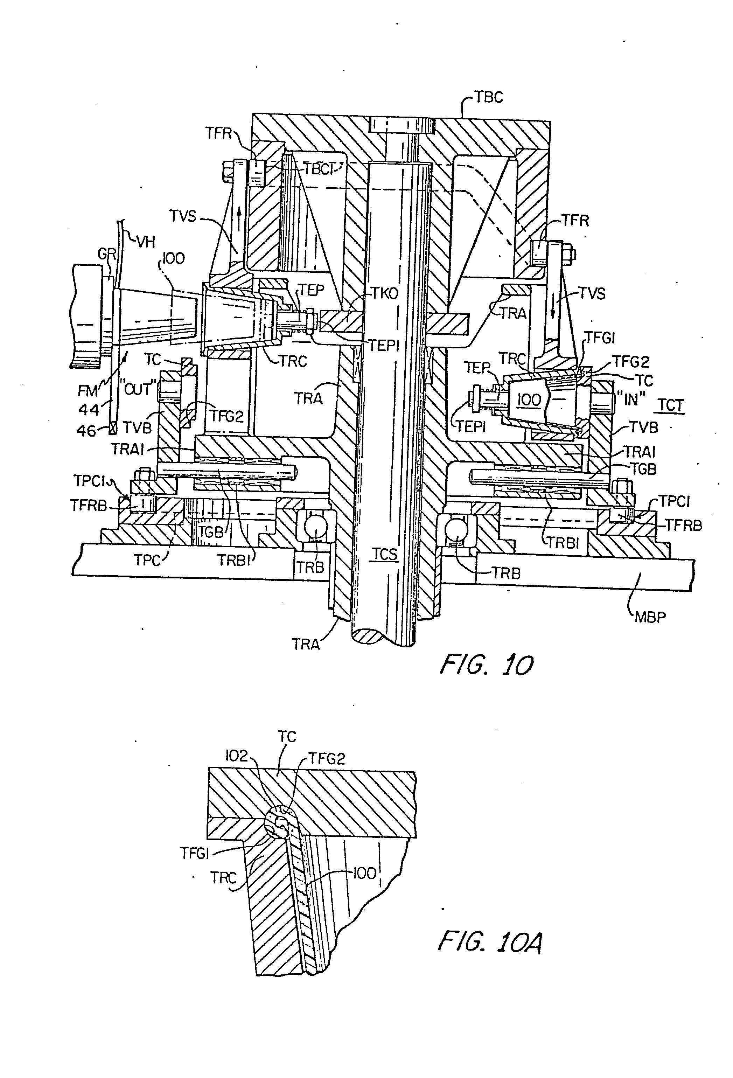

Also provided in the fixed bottom disc VD2 is an ejection pressure port EPP fed from an ejection pressure supply source EPS. The ejection pressure port EPP is positioned to time the application of positive pressure through vacuum ports VPR, vacuum hoses VH and vacuum ports VP (VP1) in the mandrels FM (FM1) to eject finished containers therefrom at the ejection portion of the work station WS as will be more fully described with reference to Figs. 9 and 10.

Referring to Figs. 7 and 9, a bank of work stations WS is shown including bottom blank loading, top curl forming, bottom sealing and ejection functions.

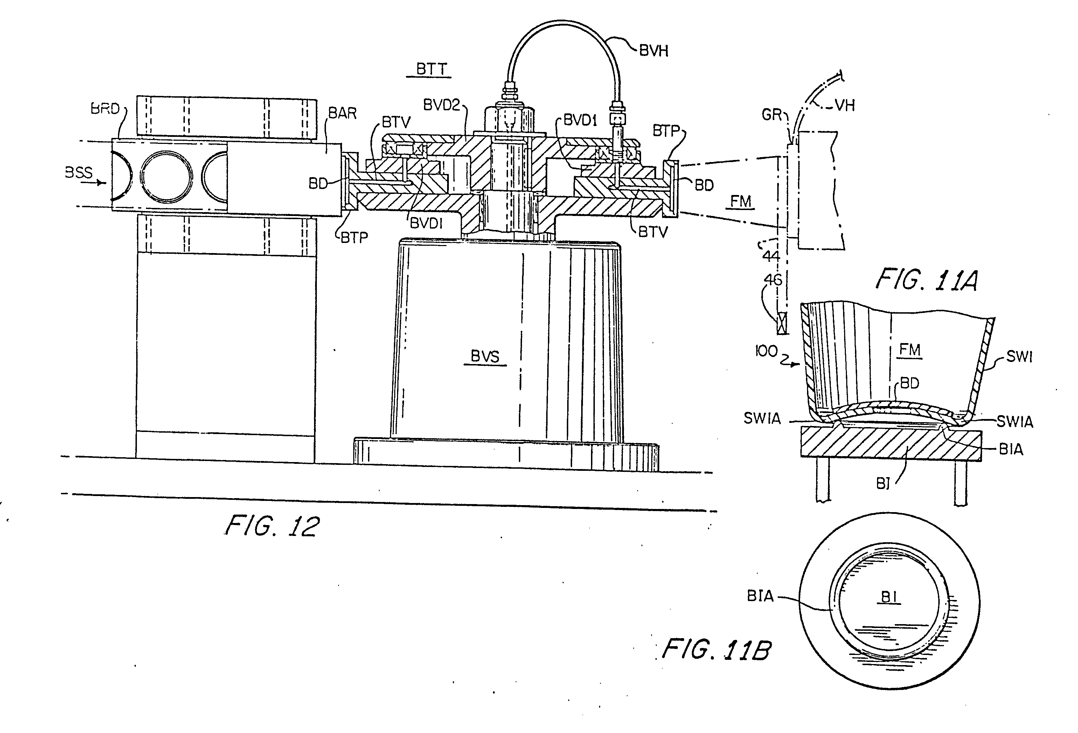

As specifically shown in Figs 9 and 11, the chain carried mandrels FM are passed along a juxtaposed guide rail GR as they exit the heat tunnel HT at HT2.

The guide rail GR provides a thrust backing to cooperate with a bottom ironing turret BIT having bottom irons BI in a radial array with peripheral spacing therebetween on the said turret corresponding to the spacing between adjacent finishing mandrels FM on the chain 46.

The bottom ironing turret BIT includes a rotating toroidal mounting BIM for the bottom irons BI in which the latter are radially reciprocable. A central cam BIC is provided which constrains the bottom irons BI to engage with the bottom of formed cups or containers 100 on the finishing mandrels FM by means of cam follower wheels BIF and return springs BIS (Fig. 11).

Bottom sealing pressure is regulated by a compression spring BIP mounted in a telescoping section of the bottom iron BI in opposition to the return spring BIS to prevent the bottom irons BI from engaging the bottoms of the containers 100 on the mandrels FM with more than a predetermined maximum sealing force.

As shown in Figs. 11A and 11B, the bottom iron BI is configured with a raised annular boss BIA dimensioned to press into the inturned edges SW1A of the sidewalls SW1 of the finished cups or containers 100 on the mandrel FM at a point at which the bottom blank BD is overlapped to enhance the seal therebetween and ensure a liquid tight container bottom structure.

Depending on the properties of the shrinkable foam material and bottom blank material the heat of the shrinking process may provide sufficient heat to form an annular heat seal on the bottom of the containers 100 or the bottom irons BI can be heated to supply additional sealing heat.

As known in the art other heating means, adhesives, solvents or the like may also be used to enhance the ultimate bond between the inturned portions SW1A (SW2A) of the sidewalls SW1 (SW2) of the containers 100 and the bottom blanks BD (BD1).

A purely heat sealed bond is the preferred embodiment, however.

Referring to Fig. 10 in addition to Fig. 9, a top curl forming turret TCT is shown adjacent to the bottom ironing turret BIT for receiving finished cups or containers 100 ejected from the finishing mandrels FM and forming a top curl thereon, i.e., rolling the top rim outward on itself as is a well-known practice in the cup and container art.

The top curl turret TCT is shown as including a centrally located barrel cam TBC having a cam track TBC1 in which a plurality of follower rollers TFR ride to constrain vertical movement to respective ones of a like plurality of vertical slides TVS on which are mounted radially disposed and outwardly opening cups receiving cavities TRC.

The barrel cam TBC is coaxially and fixedly mounted on the upper end of a non-rotating central shaft TCS for the turret TCT, the said shaft TCS being journaled through a hub assembly TRA which is mounted for relative rotation to the shaft TCS on a machine base plate MBP in bearing means TRB.

The hub assembly TRA provides outboard slots for the vertical slide members TVS and an annular plate TRA1 beneath which a plurality of radially disposed bearing means TRB1 are provided to receive reciprocating guide bars TGB for top curl forming tools TC mounted one in registry with each cup receiving cavity TRC on vertical bars TVB each extending upward from respective buide. bar TGB and a cam follower roller TFRB engaging a cam track TPC1 in an annular plate cam TPC fixedly mounted on the machine base plate MBP.

Between the hub assembly TRA and the barrel cam TBC on the central shaft TCS is an annular kick-out cam TKO having a single kick-out rise TKR at a desired ejection station position TES (Fig. 9) to effect ejection of the containers 100 from the cavities TCR.

The kick-out cam TKO is engaged in the uppermost positions of the container cavities TRC and vertical slides TVS by the inboard tips TEP1 of ejection pin assemblies TEP which are spring-biased to telescopically reciprocate in and out of the base of the container receiving cavities TRC to eject finished cups or containers 100 therefrom by a plunger action induced by the kick-out cam TKO.

Referring additionally to Fig. 10A, the top curl tool TC is shown in the "IN" position as constrained by the plate cam TPC to cause mating top curl forming surfaces TFG1 in the periphery of the cavities TRC and TFG2 in the top curl tool TC to force the top of each container 100 into the curled configuration 102 shown in Fig. 10A and at the "IN" position of the top curl tool TC in Fig. 10.

Thus, in operation, rotation of the hub assembly TRA on the central shaft TCS causes coordinated vertical movement of the slides TVS and the receiving cavities. TCR and radial movement of the curling tools TC to maximum height and radially outward positions, respectively, at the "OUT" position in Fig. 10 and minimum height and innermost radial positions, respectively, at the "IN" position of Fig. 10.

This is effected by the coordinated shapes of the cam tracks TBC1 and TPC1 on the barrel cam TBC and plate cam TPC, respectively.

In the "OUT" position of the top curl tool TC, the receiving chamber TCR is shown in Figs. 9 and 10 as being indexed to-receive a cup or container 100 from the finishing mandrel FM as ejected therefrom by positive pressure in the vacuum hose VH.

The hub assembly TRA rotates in synchronism with the travel of the mandrels FM on the chain 46 and the receiving chambers TRC bearing a container 100 progress toward the "IN" position of Figs. 9 and 10 in which the curling tool TC has been brought into juxtaposed registry with the receiving cavity TRC to form the top curl 102 on the container 100 (see Fig. 10A).

Subsequently, the tool TC and the receiving cavity TRC separate rapidly and the latter rapidly rises under control of the barrel cam TBC to engage the inboard end TEP1 of the ejection plunger TEP with the kick-out cam TKO and the ejection rise TKR thereon at the ejection station TES (see Fig. 9).

This ejects the containers 100 into engagement with an inverting detent 104 in a magazine chut MAG such that the finished containers are magazined in an upright position.

Prior to the placing of the cylinders 10C onto the finishing mandrels FM (FM1) a bottom blank or disc BD must be placed on the outboard end of the said mandrels to be held thereon by vacuum in the vacuum lines VH from the vacuum distributor VD as previously shown in Figs. 6A, 6B, 8A and 8B.

To accomplish this function, a supply of bottom blanks BD and a means for transferring them from the supply to the finishing mandrels FM (FM1) must be provided.

To this end, referring jointly to Figs. 9 and 12, bottom strip stock BSS is fed to a rotary die roller BRD and anvil roll BAR to cause the die roller to cut discs BD from the strip stock BSS and present it to a bottom transfer plate BTP on a bottom transfer turret BTT adjacent to the anvil roll (BAR and indexed therewith to pick up each bottom disc BD as it is cut.

The bottom transfer plate BTP bearing the bottom disc BD is eventually indexed into registry with a passing finishing mandrel FM (FM1) and transferred thereto.

The initial pick up of the bottom disc BD by the transfer plate BTP is made by vacuum applied via a vacuum port BTV through vacuum distributors BVD1 and BVD2.

The distributor BVD1 rotates with the bottom transfer plates BTP on the turret BTT while the distributor BVD2 remains stationary.

-18-

Vacuum is supplied through a vacuum hose BVH from a vacuum supply source BVS in the base of the turret BTT. The fitting of the hose BVH to the fixed distributor BVD2 acts as a valve to provide vacuum to the ports BTV at all locations via the distributors BVD1, BVD2 except at the right-hand position shown in Fig. 12 for the bottom transfer plates BTP. In this position, there is no vacuum in the line BTV and the vacuum from the hose VH in the finishing mandrel FM, now coaxially indexed with the bottom transfer plate BTP will act to strip the bottom disc BD from the plate BTP and onto the base of the mandrel FM.

In-Line Filling Of Containers As They Are Made

As the finished containers 100 enter the magazine MAG at the ejection station TES of the top curl turret TCT, the containers can be fed, one-by-one, as known in the art to dial-like feeder discs 104 which are indexed by a shaft 106 to feed the containers 100, one-by-one, to a container filling station 110 where food product 112 in a measured amount is discharged into the container 100. The container 100 is elevated by a pedestal 108 to the filling station 110, which pedestal withdraws to return the container to rest in the dial 104 on its top curl 102.

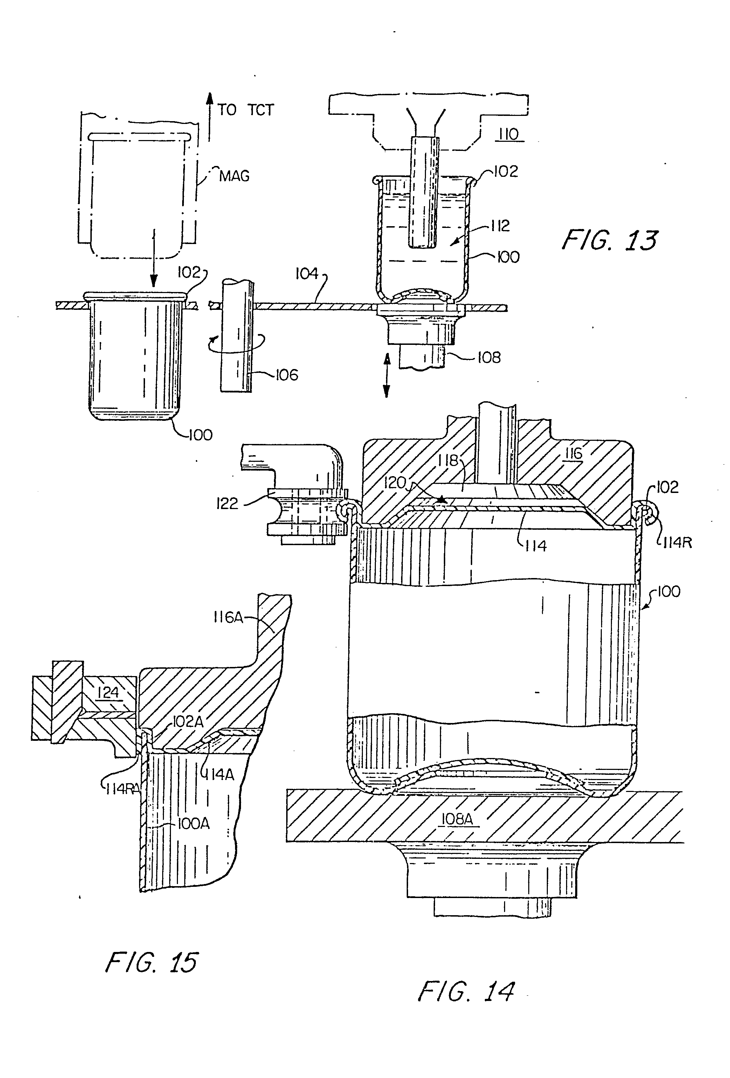

The container 100 with food 112 is then transferred to another station where a lid 114 is pressed onto the top curl 102 of the container 100 by a seating jig 116 as will now be described with reference to Fig. 14.

The jig 116 is provided with an ejection plunger 118 to eject the lid and container from the jig 116 after seating is completed. An air gap 120 is maintained between the plunger 118 and the lid 114 in the event that vacuum is needed to initially retain the lid 114 in the jig 116.

A plurality of shaped pressure rollers 122, such as schematically illustrated are spaced around the top curl 102 and produce a curved seam 114R between the top curl 102 and the lid 114.

A pedestal 108A is utilized to transfer the filled container 100 from the dial 104 to the lid seating jig 116.

In an alternate embodiment for seating a lid 114A on a container 100A, having an uncurled top edge 102A, a top edge overlap 114RA on the lid 114A is clinched in place by segmented jaws 124 in cooperation with a seating jig 116A. This embodiment is shown schematically in Fig. 15.

Rotary transfer dials 104 and pedestals 108 and filling stations 110 such as those shwon in Fig. 13 are known in the art.

For example, U.S. Patent 3,225,899 for Machine For Packaging Food Products of J. B. West, issued December 28, 1965, and U.S. Patent 3,345,801 for Auxiliary Unit For Packaging Machine to J. B. West, issued October 10, 1967, illustrate container filling, capping ahd handling machines of the type generally described with reference to Figs. 13, 14 and 15.

With the present invention, cans and containers can be made as needed and no storage of completed containers is necessary in conjunction with a given canning or packaging run.

Only rolls of sidewall and bottom blank material need be stored to effect a supply of containers for holding a given volume of food product.

This also permits the use of non-nestable container shapes which heretofore have been undesirable because of their bulk in an unfilled condition. Once filed, of course, even nestable containers assume such bulk in storage.

Thus, with the continuous container manufacturing method and means of Figs. 1 - 12, feeding the continuous filling and capping equipment typified by Figs. 13 - 15, an extremely efficient operation is provided which requires only a minimum of warehouse space for the containers required.

### Summary Of Container Making Operation

As illustrated in Figs. 1 - 3, foam plastic strip stock, stretch oriented on its length 10B, is cut into rectangular blanks 10A and transferred transversely of its length 10B through continuous folding means M, H1, H2, FR1, FR2 and a heat seaming means PB to form seamed cylinders 10C circumferentially stretch oriented.

The cylinders 10C are placed over finishing mandrels FM (FM1) having bottom blanks BD already in place from a bottom transfer turret BTT (Figs. 9, 12).

A chain drive 46 (Figs. 1, 3, 7, 9) carries the mandrels FM (FM1) through a heat shrink tunnel causing the cylinders 10C to shrink and assume the shape of the mandrels FM (FM1) · as shown in Fig. 6A/6B. The sidewalls SW1 (SW2) shrink beneath the mandrels FM (FM1) to place annular overlapping portions SW1A (SW2A) over the outer edges of the bottom disc BD (BD1) as further shown in Fig. 6A (6B).

As the mandrels FM (FM1) bearing shrink formed containers 100 leave the heat tunnel HT (Figs. 7, 9, 10, 11) bottom seams are formed in the overlap by bottom irons BI on a bottom ironing turret BIT in a manner most specifically illustrated in Figs. 11A, 11B.

The top curl 102 is then formed on the containers 100 by discharging them from the mandrels FM (FM1) into the receiving chambers TRC of the top curl forming turret TCT which, as shown in Fig. 10A, places a top curl 102 in each container 100 with top curl tool TC.

Subsequent to the forming of the top curl 102, the container 100 is ejected from the top curl turret TCT at an ejection station TES, inverted to proceed bottom first into a magazine MAG and thus placed in readiness for either packaging or for processing in filling equipment.

## Further Embodiment Of The Invention

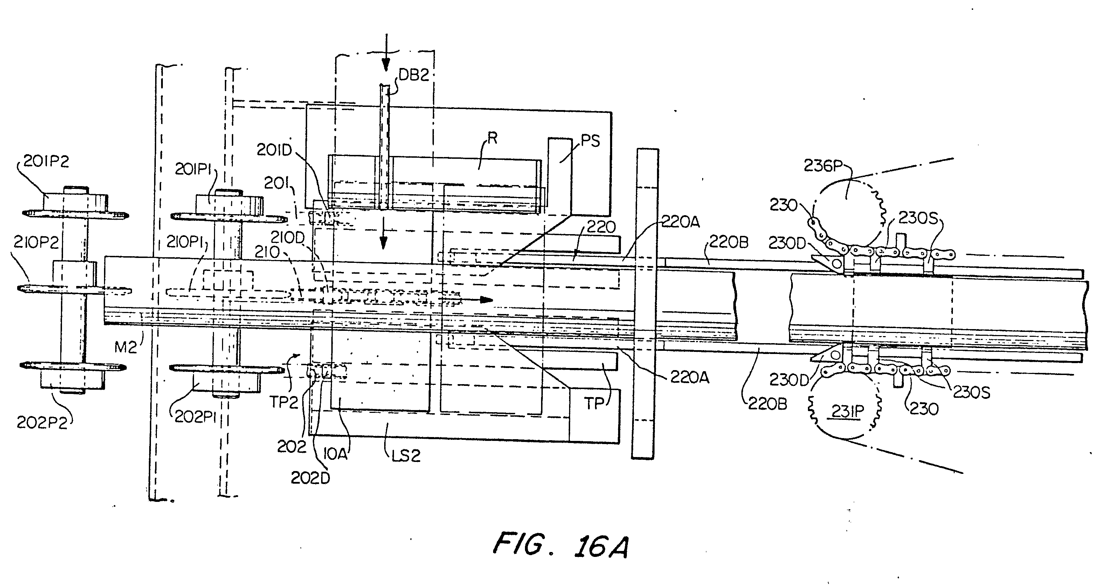

Figures 16A through 19 illustrate a further embodiment for handling a stretch oriented rectangular blank and forming the blank into a cylinder. This further or alternate embodiment of the present invention may be readily utilized in combination with the blank handling, cylinder forming and cylinder transferring mechanism illustrated in Figures 1 through 15.

Figures 16A through 16C illustrate a top-plan view of the alternate embodiment blank handling and cylinder forming mechanism of the present invention. Figure 16A illustrates a top-plan view of the left-hand portion of the alternate embodiment. The rectangular blank 10A is fed on its longitudinal axis by the drive belt DB2 to a right angle transfer point TP2. The blank 10A is properly positioned at the transfer point TP2 by means of the limit stop LS2. After the blank 10A is properly positioned, it is ready to be laterally transferred in a direction 90° to its original path.

As illustrated in Figures 16A through 16C, a tubular forming mandrel M2 extends from the transfer point TP2 to the point where the formed cylinders 10C are transferred to a final forming mandrel FM. As shown in Figure 16A, when the blank 10A is positioned beneath the tubular forming mandrel M2 it is engaged by the outboard chain pusher dogs 201D and 202D and by the blank pusher dog 210D. The outboard chain pusher dog 201D is connected to the outboard chain 201. Similarly, the outboard chain pusher dog 202D is connected to the outboard chain 202. The two outboard chains are guiding and stabilizing means which engage the blank 10A at the transfer point TP2 and remain in contact therewith until the blank has reached the prefold rails 220.

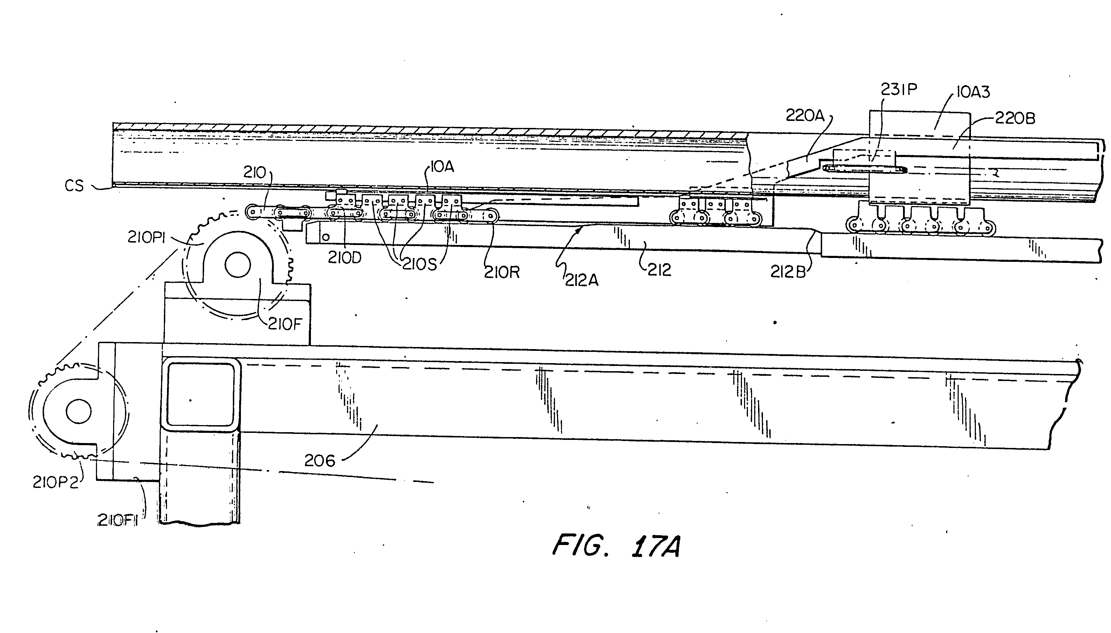

The blank pusher chain 210 extends the entire length of the tubular forming mandrel M2. The blank pusher dog 210D projects upwardly into a clearance slot which is formed on the underside of the tubular forming mandrel M2. As the blank 10A is positioned at the transfer point TP2, three pusher dogs 201D, 202D and 210D engage the blank and transfer it at an angle of 90° from its original path. Referring to Figures 17A through 17C the blank pusher chain 210 includes groups of four blank support dogs 210S together with one blank pusher dog 210D. At the transfer point TP2, the four blank support dogs 210S are positioned beneath the blank 10A. Therefore, the blank 10A is permitted to pass over the four blank support dogs 210S. This positioning if effected by the relationship between the blank pusher chain rollers 210R and the support bar 212.

The combination of the three chain pusher dogs 210D, 202D adn 210D together with the long rubber covered roll R, the transfer plate TP, the four blank support dogs 210S and a plexiglass cover sheet PS prevent the blank 10A from skewing as it moves from the transfer point TP2 towards the pre-fold rails 220. The plexiglass cover sheet PS covers teh area adjacent the initial pusher dog contact and blank movement. The plexiglass cover sheet includes a "V" shaped notch which is machined in the outfeed end of the plate. With reference to Figure 16A, as a blank 10A moves beneath the plexiglass sheet PS, the past portion of the blank to be released will be the two trailing tips.

Referring to Figure 17A, as the two trailing tips of the blank 10A are released by the plexiglass sheet PS, the blank pusher chain rollers 120R travel up an incline 212A on the support bar 212. Correspondingly, this increases the elevation of the four blank support dogs 210S which in turn push the blank 10A into contact with the tubular forming mandrel M2. In addition, the increase in elevation causes the blank pusher dog 210D to further project upwardly into the clearance slot CS on the underside of the tubular forming mandrel M2. Therefore, the blank 10A is clamped to the tubular forming mandrel M2 as it travels towards the outfeed end of the tubular forming mandrel.

After the blank 10A is clamped by the blank pusher dog 210D, the blank engages the stationary pre-fold rails 220 and lose contact with the outboard chain pusher dogs 201D and 202D. The stationary pre-fold rails 220 include a lifting portion 220A and a substantially horizontal guiding portion 220B. As the blank 10A engages the lifting portion of the pre-fold rails, the blank is folded against the bottom half of the forming mandrel into a vertical "U" shaped configuration.

As illustrated in Figures 16A and 17A, as the blank 10A is folded into a vertical "U" shaped configuration 10A3 the back side edges of the blank are contacted by two side guide pusher dogs 230D. The side guide pusher dogs 230D are connected to side guide chains 230. Further, the side guide chains 230 include blank support dogs 230S. The two side guide chains provide stability to maintain the top edges of the blank 10A3 parallel during transportation in the 50% folded position to the side seam heaters. As soon as the side guide chain dogs 230D engage the blank 10A3, the blank pusher chain rollers 210R travel down an incline 212B. Thus, the clamping effect of the four blank support dogs 210S against the tubular forming mandrel M2 is released permitting the side guide chain dogs 230D to square up the blank 10A3 prior to the heat sealing operation.

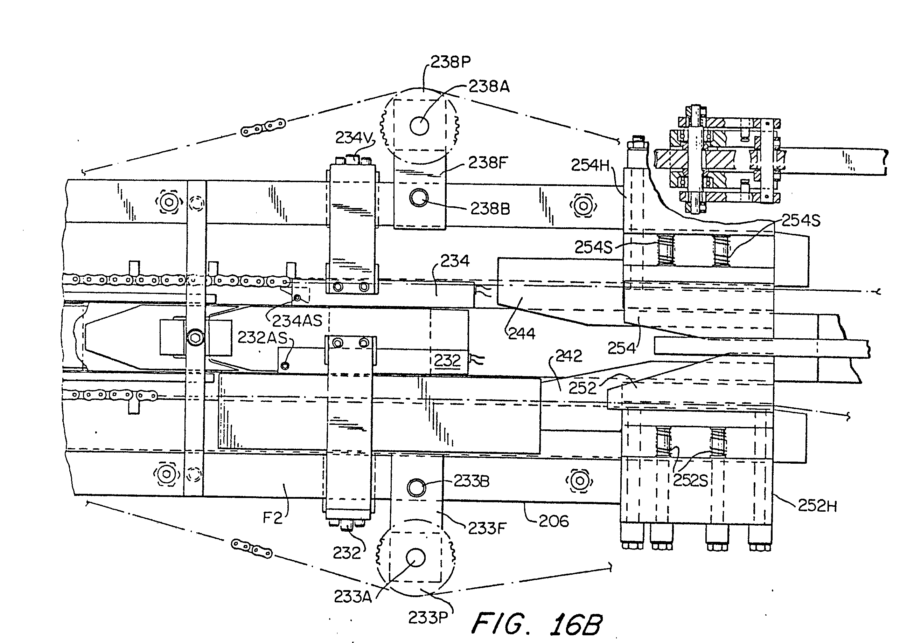

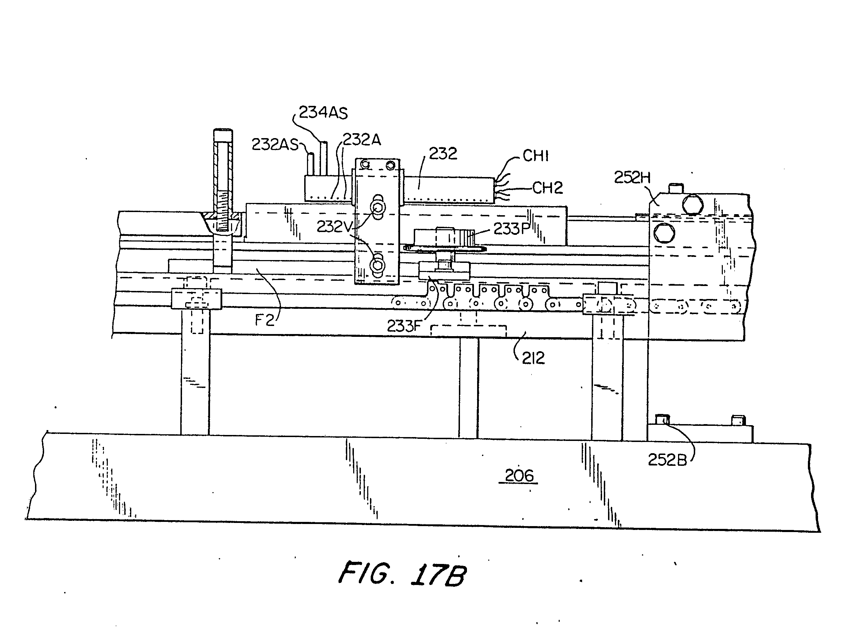

Figures 16B and 17B illustrate the position of the side seam heaters. The blank handling and cylinder forming mechanism of the alternate embodiment of the present invention includes two side seam heaters 232 and 234. Each side seam heater comprises a long metal block and includes at least one cartridge heater positioned therein.

Referring to Figure 17B, the side seam heater 232 includes two cartridge heaters CH1 and CH2. A compressed air supply 232AS is in communication with a plurality of small holes 232A positioned along the side of the side seam heater 232. As the cartridge heaters CH1 and CH2 increase the temperature of the side seam heater, the compressed air supplied thereto is heated. The side seam heater 234 is similar in construction to the side seam heater 232 and is connected to a compressed air supply by means of the conduit 234AS.

Both side seam heaters 232 and 234 are mounted to the blank handling and cylinder forming mechanism so as to be readily removable therefrom. Each side seam heater can be adjusted both vertically and horizontally. The vertical adjustment would be effected by loosening the bolts 232V, adjusting the vertical height of the side seam heater 232 and then tightening the bolt 232V to affix the side seam heater to the framework F2. Similarly, the side seam heater 234 may be adjusted vertically by means of the bolts 234V.

It is extremely important that the side seam heaters be adjustably mounted adjacent the blank handling and cylinder forming mechanism. If a blank jams as it passes along the tubular forming mandrel, it may be necessary to remove the side seam heaters to gain access to the jammed blank.

The 50% folded blank 10A3 is transported along the tubular forming mandrel M2 by means of the blank pusher dog 210D and the two side guide chain dogs 230D. The upwardly projecting sides of the blank 10A3 are vertical and do not contact the side seam heaters 232 and 234.

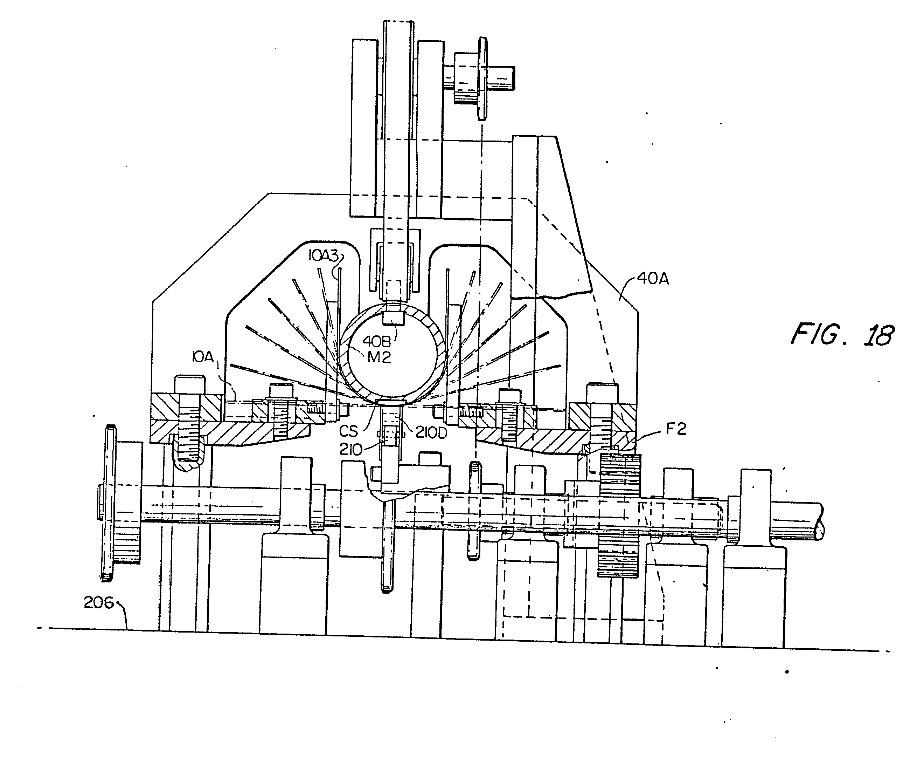

As previously discussed, compressed air is heated and blown through a series of small diameter holes in the side seam heaters 232 and 234. With reference to Figure 18, the heated compressed air strikes the left-hand outside portion and the right-hand inside edge of the blank 10A3. Individual temperature control of the two side seam heaters is desirable since different temperatures may be required for each side for proper softening prior to seaming.

As upwardly projecting sides of the blank 10A3 are heated by the compressed air, the natural reaction is for both sides of the blank to move away from their previously parallel condition. Since the right-hand side of the blank moves away from the side seam heater 232, it may be necessary that the temperature of the side seam heater 232 be greater than the temperature of the side seam heater 234. Correspondingly, since the left-hand side of the blank has a tendency to move closer to the side seam heater 234, the temperature of the side seam heater 234 may be less than the temperature of the side seam heater 232. Temperature requirements of the side seam heaters 232 and 234 will vary depending on the quality of the foam of the blank. Further, depending on the quality of the foam of the blank it may be necessary to evenly apply heat to both the right-hand side and left-hand side of the blank.

After the 50% folded blank 10A3 is heated by means of the side seam heaters 232 and 234, it is transported towards the outfeed end of the tubular forming mandrel M2 by means of the blank pusher dog 210D and the two side guide pusher dogs 230D. The upwardly projecting heated left-hand side of the blank initially contacts the intermediate folding guide 244. Subsequently, the upwardly projecting heated right-hand side of the blank engages the intermediate folding guide 242. The intermediate guides 244 and 242 shape the substantially U-shaped blank into a substantially cylindrical form. Subsequently, the substantially cylindrical blank engages the final folding guides 254 and 252.

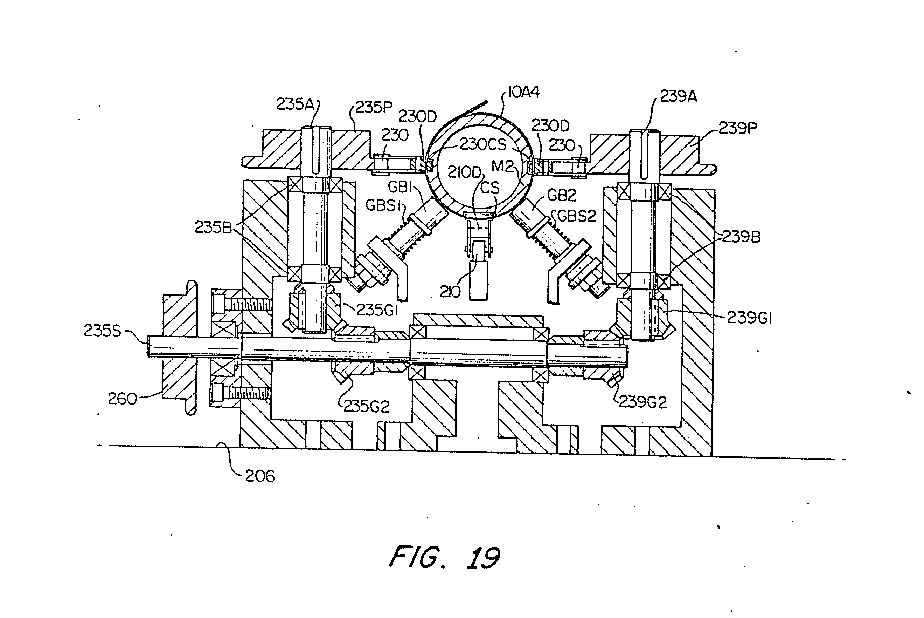

The final folding guides position the right-hand side of the blank on top of the left-hand side of the blank in an overlapping arrangement. Note, with reference to Figure 19, which is a cross-sectional view from the outfeed end of the tubular forming mandrel M2, the right and left-hand sides of the blank are interposed.

Referring to Figures 16B and 17B, the final folding guides 254 and 252 are shown to be adjustably mounted relative to the tubular forming mandrel M2. The final folding guides include two adjustable, spring-loaded bars GB1 and GB2 positioned on each side of the lower portion of the tubular forming mandrel M2. The two lower guide bars GB1 and GB2 are positioned at 45° from the vertical center line of the tubular forming mandrel and are normal to the mandrel diameter. The two lower guide bars hold the blank against the mandrel to ensure a tight final fold. The two lower guide bars GB1 and GB2 including springs GBS1 and GBS2 are shown schematically in Figure 19.

The final folding guides include two adjustable, spring-loaded bars which are positioned on each side of the upper portion of the tubular forming mandrel. The upper guides, or intermediate guide rails 242 and 244, initiate the final fold which is completed by two adjustable, spring-loaded guides 252 and 254. The two final folding guides are positioned on each side and near the top center of the tubular forming mandrel M2. As shown in Figure 16B, the intermediate forming guides 242 and 244 are adjustably mounted adjacent the upper portion of the tubular forming mandrel. Further, the springs 252S and 254S adjustably position the final forming guides 252 and 254, respectively, adjacent the top center of the tubular forming mandrel.

.The final forming guides may be formed of steel or Teflon or may be intermixed so that one is formed of steel and the other of Teflon. Further, the final forming guides 252 and 254 are supported by housings 252H and 254H, respectively. The housings 252H and 254H are connected to the framework F2 and further bolted to the undercarriage 206. As shown in Figure 17B, the housing 252H is bolted to the undercarriage 206 by means of bolts 252B.

As previously discussed, the blank 10A is transported almost the entire length of the tubular forming mandrel M2 by means of the blank pusher dog 210D. The blank pusher dog chain 210 is rotatably supported by a plurality of pulleys 210P1, 210P2, and 210P3. Additional pulleys to guide the blank pusher chain 210 may be provided, but are not shown in the drawings. The pulley 210P1 is supported by a frame member 210F which is connected to the undercarriage 206. Correspondingly, the outboard chain 201 is supported by the pulleys 201P1 and 201P2 to rotatably support the outboard chain 201 in the vicinity of the transfer point TP2. Further, the outboard chain 202 is supported by the pulleys 202P1 and 202P2 to rotatably support the chain 202 in the vicinity of the transfer point TP2.

After the blank is folded into a "U" shape, the blank pusher dog 210D continues to transport the blank along the tubular-forming mandrel M2 and is supplemented by the side guide cahin dogs 230D. The right-hand side guide chain 230 is rotatably supported by a plurality of pulleys 231P, 233P and 235P. Correspondingly, the left-hand guide chain 230 is rotatably supported by a plurality of pulleys 236P, 238P and 239P. All of the side guide chain pulleys are fixed to the framework F2 which is secured to the undercarriage 206.

The side guide pulley 233P is rotatably mounted on an axle 233A. The axle 233A is mounted on a frame member 233F which is bolted to the framework F2 by means of the bolt 233B. Correspondingly, the side guide chain pulley 238P is mounted on an axle 238A. The axle 238A is supported by a frame member 238F. The frame member is bolted to the framework by means of a bolt 238B.

The side guide chain pulley 235P is mounted on an axle 235A. The axle 235A is geared to a shaft 235S which is rotatably driven by a pulley drive system 260. Motion imparted to the pulley drive system 260 is transmitted to the axle 235A and correspondingly rotates the right-hand side guide chain 230. Similarly, the left-hand side guide chain 230 is geared to the pulley drive system 260.

Figure 19 illustrates a cross-sectional view of the blank handling and cylinder forming mechanism of the alternate embodiment of the present invention prior to the blank 10A4 engaging the seamer assembly 270. Figure 19 represents a cross-sectional view taken from the outfeed end of the blank handling and cylinder forming mechanism. Therefore, elements which were previously referred to as the left-hand and right-hand members are interposed. Thus, the left-hand side guide chain 230, as shown in Figure 19, was previously described as the right-hand side guide chain 230. Correspondingly, the right-hand side guide chain 230, as shown in Figure 19, was previously described as the left-hand side guide chain 230.

As discussed above, the drive pulley 260 is connected to a shaft 235S which includes two gear members 235G2 and 239G2. The gear members 235G2 and 239G2 are meshed with gear members 235G1 and 239G1, respectively. In addition, the axles 235A and 239A are supported within the frame member by means of bearings 235B and 239B, respectively. The framework supporting the pulley drive system is secured to the undercarriage 206.

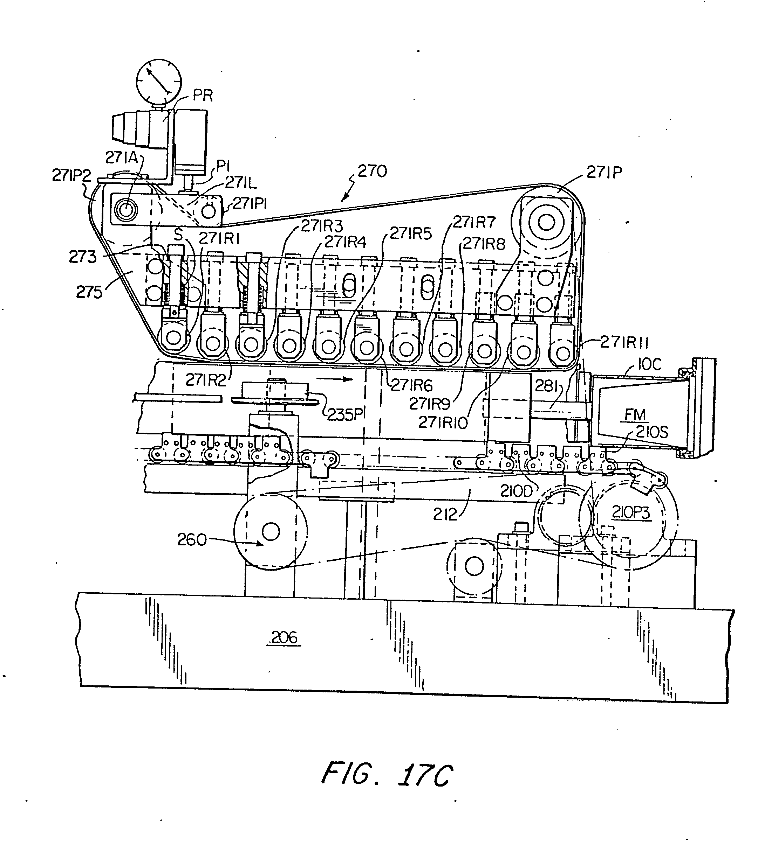

The substantially cylindrical blank 10A4 is transferred along the tubular forming mandrel M2 and is engaged by the seamer assembly 270. The seamer assembly 270 includes an endless belt 271 which is rotatably supported by a plurality of pulleys 271P, 271P1, and 271P2 and a plurality of spring-loaded rollers 271R1 through 271R11. As shown in Figure 17C, as the substantially cylindrical blank is transported towards the outfeed end of the tubular forming mandrel M2, the blank exits from the final folding assembly and is engaged by the endless seaming belt 271. The blank passes beneath the first spring-loaded roller 271R1 and is engaged by the ten subsequent spring-loaded rollers 271R2 through 271R11. Once the entire cylindrical blank length has been engaged by the second spring-loaded roller 271R2, the left-hand edge and the right-hand edge of the cylinder blank will be seamed together. After the seam is accomplished, the side guide chain dogs 230D will disengage from the cylinder blank. Further, at this point, the inside diameter of the cylinder is equal to the outside diameter of the tubular-forming mandrel M2.

The velocity of the belt 271 is approximately 20% faster than the velocity of the blank pusher chain 210. Therefore, the cylindrical blank is accelerated ahead of the blank pusher dog 210D. At this point, the cylinder blank is propelled solely by the seamer belt 271. In order to facilitate the movement of the cylinder blank, the outside diameter of the forming mandrel F2 may be reduced. Further, the velocity of the seamer belt 271 produces enought momentum to place the cylinder blank on the final forming mandrel FM. As shown in Figure 17C, as the cylinder blank moves from the forming mandrel to the final forming mandrel FM, the trailing edge of the cylinder blank is supported by the four blank support dogs 210S.

Tension is applied to the seaming belt 271 by means of the pulley 271P1 which is biased about the axle 271A. As shown in Figure 17C, pressure is supplied to the pin P1 which is in engagement with a lever 271L. As the pressure applied to the pin P1 is increased, the level 271L is biased downwardly thereby applying tension to the seamer belt 271. It is important to adjust the tension of the seamer belt 271 to control the slippage and the driving force imparted to the cylinder blank. Air pressure may be supplied to the pin P1 through the pressure regulator PR.

Each of the spring-loaded rollers 271R1 through 271R11 are mounted on a shaft which is supported in the housing 275. The first roller, 271R1, is spaced upwardly by means of a spacer 273. The spacing of the first spring-loaded roller above the plane of the remaining ten spring-loaded rollers ensures accurate contact of the seamer belt 271 with the cylinder blank. All of the spring-loaded rollers include a biasing spring S.

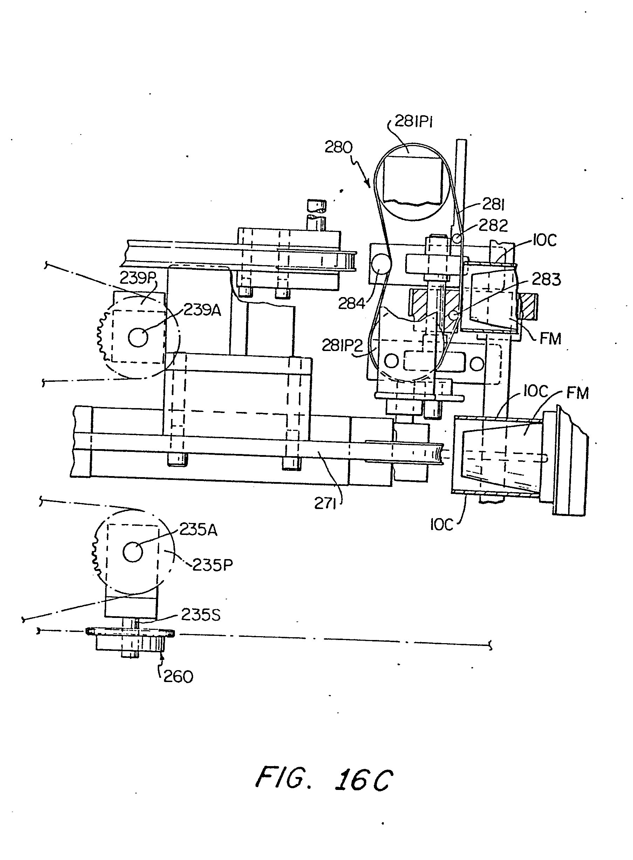

As illustrated in Figure 16C, adjacent the outfeed end of the tubular forming mandrel M2 is positioned a cylinder seating mechanism 280. The cylinder seating mechanism 280 includes a cylinder seating belt 281 which is rotatably supported on a plurality of pulleys 281P1 and 281P2. The path of the cylinder seating belt 281 is guided by a plurality of upwardly projecting pins 282, 283, and 284.

As discussed above, the velocity of the seamer belt 271 produces the momentum required to position the cylinder blank 10C on the final forming mandrel FM. The cylinder seating belt 281 ensures that the cylinder blank 10C is properly mated with the final forming mandrel FM.

As the cylinder blank 10C positioned on the final forming mandrel FM is transported adjacent the cylinder seating belt 281, the cylinder blank 10C is firmly positioned on the final forming mandrel FM. It is preferred that the velocity of the cylinder seating belt 281 be greater than the velocity of the cylinder blank 10C positioned on the final forming mandrel FM. Further, the pins 282 - 284 which guide the cylinder seating belts 281 may include rollers which will reduce the friction therebetween.

Operation Of The Alternate Embodiment

As a blank 10A is transferred from the blank cutter to the transfer point TP2 by means of the drive belt DB2, the trailing edge of the blank is engaged by the pusher dogs 201D, 202D and 210D. Subsequently, the blank 10A is transferred at an angle of 90° to its original path. The combination of the three pusher dogs, the limit stop LS2, the long rubber covered roll R, the transfer platform TP and the plexiglass sheet PS prevent the blank 10A from skewing as it is transported towards the pre-fold rails 220. The plexiglass sheet PS is machined to include a "V" shaped notch in the outfeed end thereof. As a blank 10A is transferred along the tubular forming mandrel M2, the notch in the plexiglass sheet retains the two trailing tips of the blank. At the same instant the trailing tips of the blank are released by the plexiglass sheet PS, the blank pusher chain rollers 201R travel up an incline 212A on the support bar 212. The increase in elevation of the blank pusher chain rollers 210R correspondingly elevate the four blank support dogs 210S and the blank pusher dog 210D thereby clamping the blank 10A against the bottom portion of the tubular forming mandrel M2. After clamping the blank 10A adjacent the tubular forming mandrel M2, the outboard chain dogs 201D and 202D disengage from the trailing edge of the blank 10A.

As the blank engages the stationary pre-fold rails 220A, the edges of the blank are folded against the bottom portion of the tubular forming mandrel M2. As the blank is formed into a vertical "U" shaped configuration, the trailing edges of the boank are contacted by two side guide chain dogs 230D. At the same instant that the side guide chain dogs 230D contact the 50% folded blank 10A3, the blank pusher chain rollers 210R travel down an incline 212B and thereby release the clamping effect on the blank. The two side chain support dogs provide stability to retain the top edges of the blank parallel as the blank is transported in its 50% folded position. Further, as the clamping effect is released from the blank, the side guide chain dogs square up the blank prior to the heat-sealing operation.

As the 50% folded blank 10A3 is transported along the tubular forming mandrel M2 by means of the blank pusher dog 210D and the side guide chain dogs 230D, the upwardly projecting edges are heated by the side seam heaters 232 and 234. Viewing the blank handling and cylinder mechanism of the alternate embodiment from the infeed end, compressed air blwon through a series of small diameter holds in the side seam heater 232 will strike the right-hand inside edge of the blank 10A3. Correspondingly, heated compressed air blown through a series of small diameter holes in the side seam heater 234 will strike the left-hand outside edge of the blank 10A3.

As the heated blank is transported along the tubular forming mandrel M2, the left-hand edge of the blank will engage the intermediate side 244 and will be folded adjacent the upper portion of the tubular forming mandrel. Subsequently, the right-hand edge of the blank 10A3 will engage the intermediate guide 242 and be folded towards the upper portion of the tubular mandrel. As the transportation blank continues, the folded edges of the blank will engage the final folding guides 252 and 254 to position the edges of the blank adjacent the top center of the tubular forming mandrel. The left-hand edge of the blank will underlie the right-hand edge of the blank and will be ready to be engaged by the endless seamer belt 271.

Once the entire cylinder blank link has passed under the second roller of the seamer belt assembly, the seam is completed and the side guide chain dogs 230D disengage from the trailing edge of the blank. At this point, the inside diameter of the cylinder blank is equal to the outside diameter of the forming mandrel. The seamer belt velocity is approximately 20% faster than the blank pusher chain dog 210D. Therefore, the cylindrical blank is accelerated ahead of the pusher chain dog. As this occurs, the seamer belt 271 becomes the sole means of propelling the cylinder blank. In order to facilitate movement of the cylinder blank, the outside diameter of the tubular forming mandrel may be reduced.

The velocity of the seamer belt 271 produces the momentum required to position the cylinder blank 10C on the final forming mandrel FM. As the cylinder blank is transported from the tubular forming mandrel M2 to the final forming mandrel FM, the trailing edge of the cylinder blank is supported by the four blank support dogs. Subsequently, the cylinder blank 10C positioned on the final forming mandrel FM is transported adjacent the cylinder seating belt 281. The cylinder seating belt 281 is designed to ensure proper seating of the cylinder blank 10C on the final forming mandrel FM.

After the cylinder blank 10C is properly positioned, the final forming mandrel is transported through a heat tunnel and subsequently the formed container is discharged from the final forming mandrel. The discharging of the finished container from the final forming mandrel is adequately discussed with reference to Figures 1 through 15.

Further, although Figures 16C and 17C illustrate a frustoconical final forming mandrel FM, a cylindrical final forming mandrel FM1 may be utilized in the alternate embodiment of the present invention.

Referring in detail to Figure 18, there is illustrated the various positions of the rectangular blank 10A as it is formed from a flat sheet into a vertical "U" shaped configuration 10A3. The tubular forming mandrel M2 is shown to include a clearance slot CS into which the upwardly projecting blank pusher dog 210D is driven along the length of the tubular forming mandrel M2 by means of a drive chain 210.

The tubular forming mandrel M2 is supported above the undercarriage 206 by the support frame 40A. As shown in Figure 18, the tubular forming mandrel M2 is affixed to the frame 40A by means of a bolt 40B. Additional supports may be provided along the length of the tubular forming mandrel to ensure its relative position with respect to the undercarriage 206. Further, as illustrated in Figure 18, the undercarriage 206 supports a plurality of driving gears and pulleys which are utilized to supply power to the various drive chains and other working members of the blank handling and cylinder forming mechanism of the present invention.

As previously stated, Figure 19, represents a cross-sectional view of the blank handling and cylinder forming mechanism of teh present invention as viewed from the outfeed end of the tubular forming mandrel M2. It is important to note, that the side guide chain dogs 230D project inwardly into clearance slots 230CS in the tubular forming mandrel M2. As clearly illustrated in Figure 19, the inward projection of the side guide chain dogs and the blank pusher dog into the various clearance slots provided in the tubular forming mandrel M2 ensures the positive transportation of the rectangular blank. Each of the pusher dogs utilized to transport the rectangular blanks engage the blank with a large surface area because they project into the corresponding clearance slots in the tubular forming mandrel M2.

## The Bottom Blank Apparatus And Method

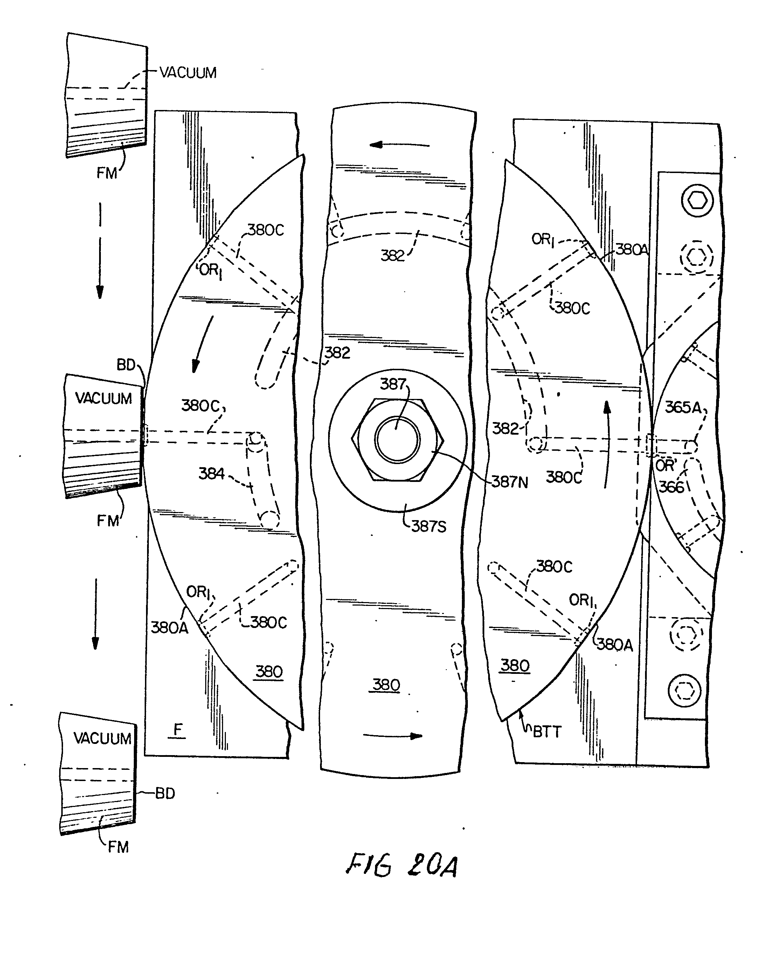

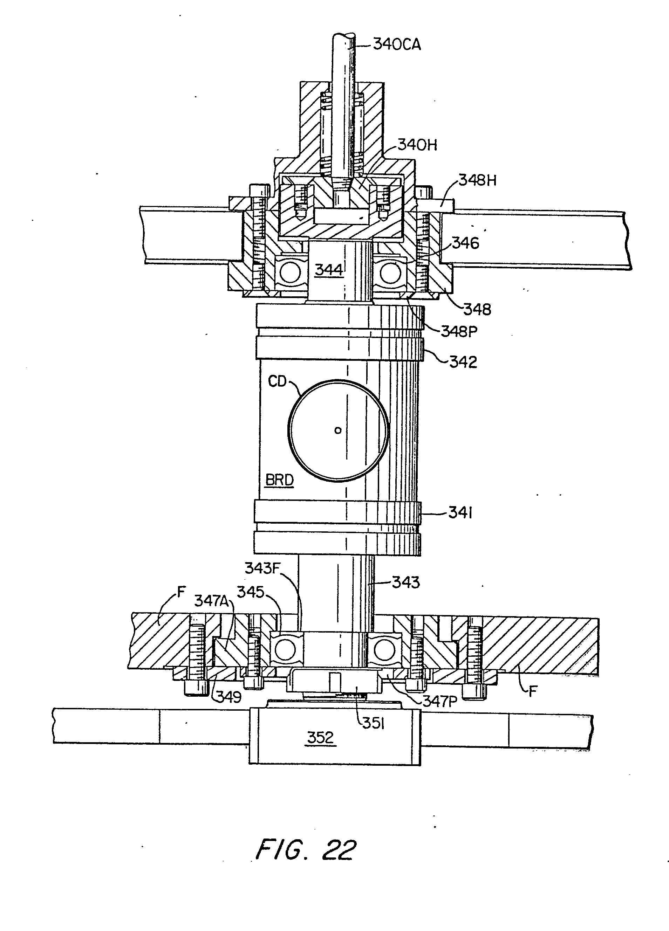

Figures 20A and 22 illustrate a more detailed preferred embodiment of a bottom blank handling apparatus for severing bottom blanks from a web feed roll and tangentially transferring the bottom blanks to final forming mandrels at a compatible velocity and spacing.

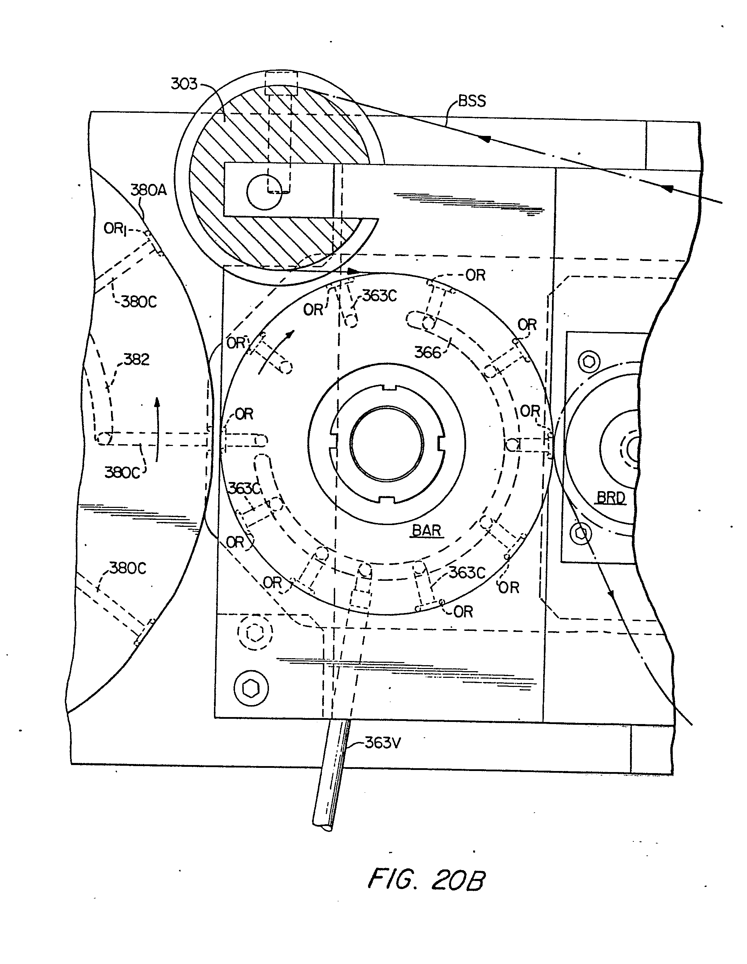

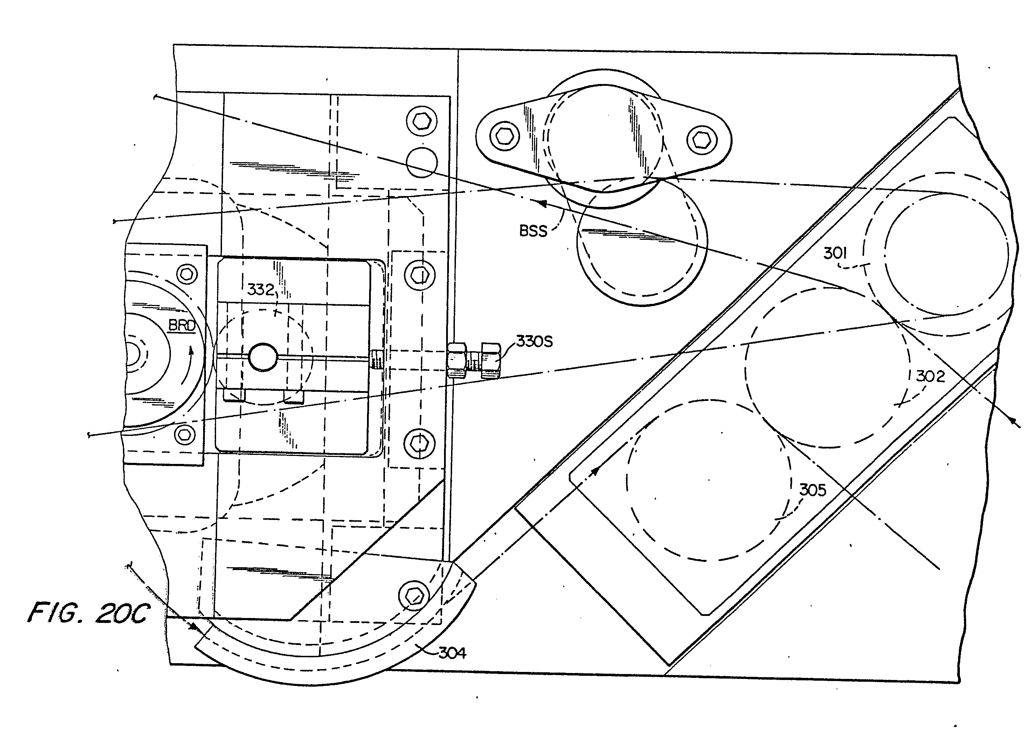

Figures 20A through 20C illustrate a top-plan view of the detailed disclosure of a bottom blank handling apparatus of the present invention. Figure 20A illustrates a top-plan view of the left-hand portion of the apparatus. Figure 20B illustrates a top-plan view of the center portion of the apparatus. Figure 20C illustrates a top-plan view of the right-hand portion of the apparatus.

As illustrated in Figures 20A through 20C, a bottom strip stock BSS is fed between the pinch rollers 301 and 302, around the stationary guide 303 and is held against the outer surface of the anvil roll BAR. Thereafter, the bottom strip stock BBS passes between the rotary die roller BRD and the anvil roll BAR where the bottom blanks BD are severed from the bottom strip stock. As illustrated in Figure 20B, after the bottom blanks BD are severed from the bottom strip stock BSS the remaining scrap portion of the bottom strip stock is conveyed around the stationary guide 304 and between the pinch rollers 302 and 305 to discharge the scrap material. In a preferred embodiment of the present invention, the pinch rollers 301, 302, and 305 are covered with a polyurethane material. The pinch rollers 301 and 302 pull the bottom strip stock from a roll of material to feed the web. Similarly, the pinch rollers 302 and 305 pull the scrap bottom strip stock from between the rotary die BRD and the anvil roll BAR to discharge the scrap material.

-36-

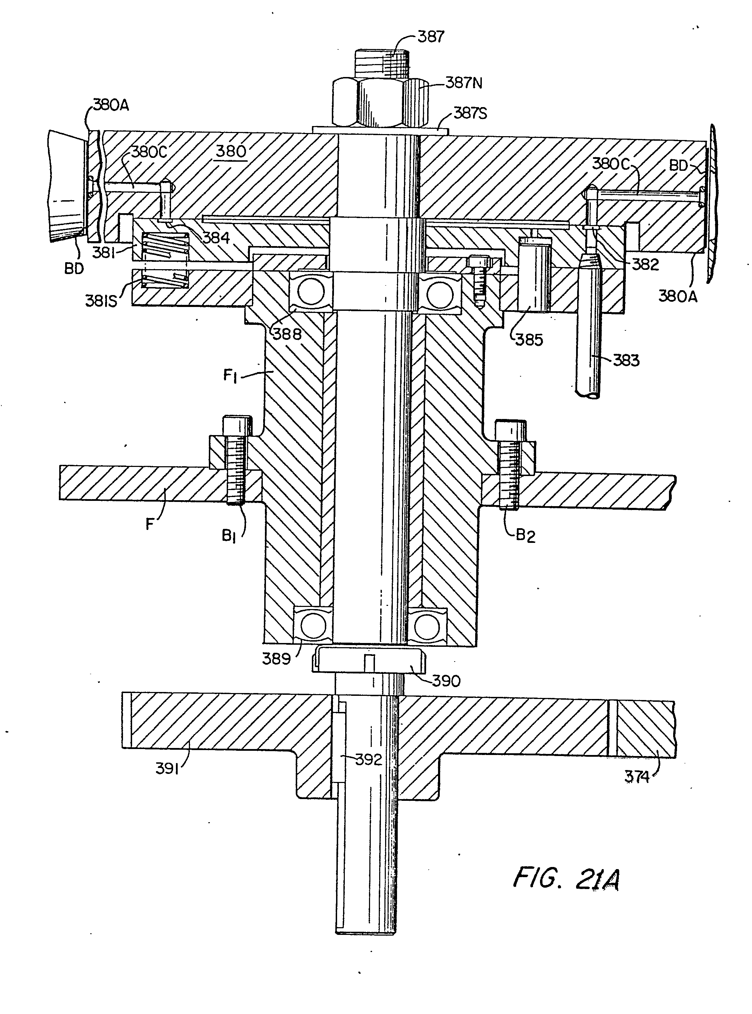

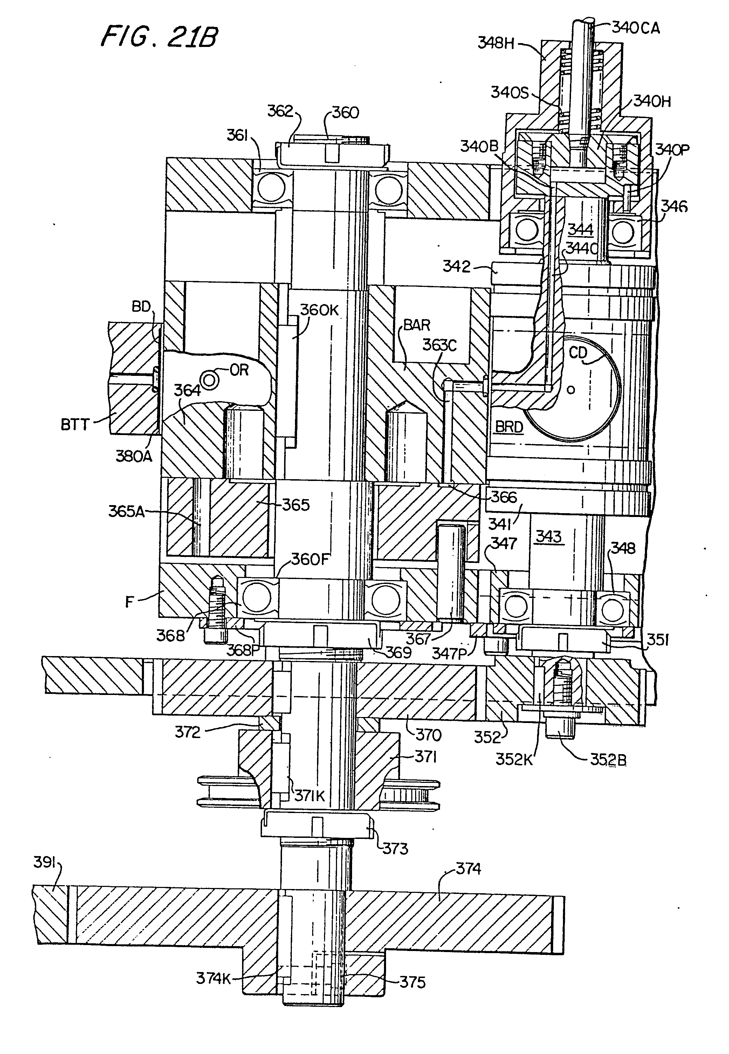

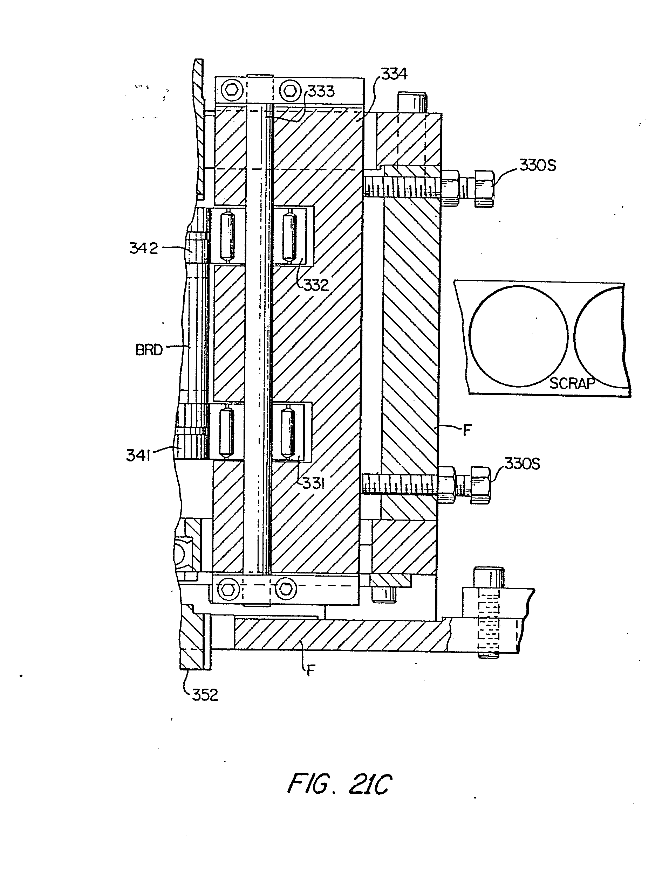

The rotary die roller BRD is mounted in sliding bearing blocks so that the jack screws 330S may accurately position the rotary die adjacent the first transfer turret or anvil BAR. Referring additionally to Figures 21A, 21B, 21C and 22, the rotary die BRD includes five cutters CD positioned around the circumference thereof. Further, the rotary die includes two bearing portions 341, 342 which are designed to engage cam followers 331, 332, respectively. The cam followers 331, 332 are mounted on a shaft 333 positioned in cam housing 334. Further, the rotary die BRD includes outwardly projecting portions 343, 344 which are mounted in bearings 345, 346, respectively. The bearings 345, 346 are mounted on the slidable bearing blocks 347, 348 which enable the rotary die to be precisely positioned adjacent the first transfer turret or anvil BAR.

The sliding bearing block 347 includes an outwardly projecting portion 347A which is slidably received between a flange of the framework F and a plate 349 which is secured to the framework F. As illustrated in Figure 22, the outer portion of the bearing 345 is securely positioned within an opening in the sliding bearing block 347. The inner portion of the bearing 345 mates with the outwardly projecting portion 343 and is precluded from axial movement by engagement with the flange 343F. Further, the bearing 345 is held in place by means of the plate 347P which is secured to the sliding bearing block 347. To ensure the positioning of the bearing 345 relative to the outwardly projecting portion 343 of the rotary die BRD a threaded nut 351 is positioned adjacent the lower end of the outwardly projecting portion 343. Further, as illustrated in Figures 21A and 22, a gear 352 is positioned adjacent the lowermost portion of the outwardly projecting member 343 and is secured thereto by means of a key 352K and a bolt 352B.

The sliding bearing block 348 together with the housing portion 348H slidably mates with the framework F at the uppermost portion of the rotary die BRD. The outermost portion of bearing 346 is securely positioned within the sliding bearing block 348. The innermost portion of the bearing 346 mates with the outwardly projection portion 344 of the rotary die BRD. To ensure the positioning of the bearing 346 relative to the rotary die BRD, a plate 348P is secured to the sliding bearing block 348. The plate 348P prevents axial movement of the bearing 346.

Referring to Figures 21B and 22, in one embodiment of the present invention a compressed air supply 340CA may be supplied to the upper portion of the housing 348H of the sliding bearing block to facilitate the transfer of a severed bottom blank BD from the bottom strip stock BSS and cutter CD to the peripheral surface of the first transfer turret or anvil BAR. The compressed air supply 340CA is securely threaded into the upper surface of a compressed air housing 340H. The upper surface of the comrpessed air housing is firmly secured to the lower portion of the housing. In this embodiment of the present invention, the lower portion of the housing is constructed of nylatron.

As illustrated in Figure 21B, the compressed air housing is prevented from rotation by means of a pin 340P. Further, the compressed air housing is spring-biased downwardly by means of the spring 340S positioned within the upper portion of the housing 348H. The compressed air housing 340H includes an opening 340B disposed in the — lowermost portion thereof which communicates compressed air from the compressed air supply 340CA to a conduit 344C of the rotary die BDR. It should be noted, that the outwardly projecting portion 344 includes five conduits 344C disposed longitudinally therein which communicate compressed air to each of the cutting dies disposed around the circumference of the rotary die BRD. Since the compressed air housing 340H includes only one opening 340B disposed in the bottom portion thereof, compressed air is transmitted to one of the longitudinally disposed conduits 344C only when the die positioned on the circumference of the rotary die BRD is in the process of severing a bottom blank BD from the bottom strip stock BSS. In other words, the compressed air is supplied to the rotary die to facilitate the discharge of a bottom blank BD to the anvil BAR only after the bottom blank has been severed from the bottom strip stock BSS. Since the compressed air housing 340H is keyed to the sliding bearing housing 348S by means of a pin 340P, rotation of the compressed air housing is prohibited. Therefore, compressed air is only supplied when the opening 340B and the longitudinally disposed conduit 344C are aligned as illustrated in Figure 21B.

Although in one embodiment of the present invention compressed air may be supplied to a compressed air housing 340H to facilitate the discharge of a bottom blank BD to the anvil BAR, it should be understood that the present invention is not limited to this particular means of aiding the discharge of the severed bottom blanks BD. For example, in the preferred embodiment of the present invention, illustrated in Figure 20B, as the bottom strip stock BSS wraps around the rotary die BDR after the bottom blanks BD are severed therefrom, the resiliency of the bottom strip stock BSS actually pops the bottom blanks BD from the bottom strip stock to the anvil BAR.

Accurate positioning of the rotary die BRD adjacent the hardened anvil BAR is achieved by the cam followers 331, 332 mounted on the shaft 333 within the cam housing 334. The cam housing 334 is slidably mounted adjacent the rotary die BRD. As previously discussed, the jack screws 330S are threaded within openings in the framework F and engage the cam followers housing 334. By rotating the jack screws 330S the cam followers housing 334 is displaced towards the rotary die BRD. The cam followers 331, 332 are likewise displaced against the bearings 341, 342 to press the rotary die against the anvil BAR. Therefore, adjusting the jack screws 330S regulates the relative contact of the rotary die BRD against the anvil BAR to ensure proper die penetration of the bottom strip stock BSS.

Referring to Figures 20B and 21B the first transfer turret or anvil BAR is illustrated as being mounted on an axle 360 being keyed thereto by the member 360K. The upper portion of the axle 360 is mounted in a bearing 261 which is positioned in the framework F. The outermost end of the axle 360 is secured to the bearing 361 by means of a screw nut 362.

The first transfer turret or anvil BAR has ten bottom blank stations positioned around the circumference thereof. As illustrated in Figure 21B, each station for receiving a bottom blank BD includes an "O" ring OR positioned adjacent to the circumferential portion of the anvil BAR to effect a better seal and permit a more accurate transfer. The "O" rings are positioned adjacent to and concentric with the ends of the vacuum conduits 363C which are supplied with a source of vacuum by means of a manifold 366 from a point prior to the severing of the bottom blanks BD from the bottom strip stock BSS by the rotary die BRD to a point immediately prior to the tangential transfer to the second transfer turret BTT. The "O" rings OR are preferably positioned in grooves by means of cement or the like and project slightly outwardly from the peripheral circumferential surface of the anvil BAR. As illustrated in Figure 20B, the vacuum conduits 363C are supplied with a source of vacuum from a point prior to the severing of the bottom blanks BD by the rotary die BRD through an arc of approximately 180° until just prior to the transfer of the bottom blanks BD to the second transfer turret BTT.

-40-

In a preferred embodiment of the present invention, the anvil BAR includes an upper portion 364 which may be constructed from steel. Further, the anvil includes a lower portion 365 which may be constructed of nylatron. The upper portion of the anvil 364 is keyed to rotate with the axle 360. The lower portion of the anvil 265 is prevented from rotating by means of the pin 367 which is inserted in the framework F. The lower portion of anvil 365 includes a manifold 366 positioned in the upper surface thereof so as to communicate the supply of vacuum to the conduits 363C between the pick-up point of the severed bottom blank BD adjacent the rotary die BRD to the tangential transfer of the bottom blank BD to the second transfer turret BTT. The lower portion of the anvil 365 includes a through opening 365A for venting the conduit 363C to atmosphere at the time of tangential transfer of the bottom blank BD from the anvil turret BAR to the second transfer turret BTT.

A bearing 368 is secured to the framework F and mounted on the axle 360 in a position beneath the anvil turret BAR. The bearing 368 is prevented from axial movement along the axle 360 because of the flange 360F. Further, a plate 360P is secured to the framework F and locks the bearing 368 in place relative to the axle 360 and the framework F. Further, a screw nut 369 is mounted on the axle 360 and ensures the proper positioning of the bearing 368 and the first transfer turret or anvil BAR.

A gear 370 is positioned on the axle 360 and keyed thereto by member 370K. Further, a pulley take-off 371 is positioned on the axle 360 and keyed thereto by member 371K. The gear 370 is spaced by element 372 from the pulley 371. Further, the pulley 371 is accurately positioned relative to the gear 370 by means of a threaded nut 373. It should be understood that the pulley 371 is connected to the gear drive for the pinch rollers 301, 302 and 305.

A gear 374 is mounted on the axle 360 and is keyed thereto by the element 374K. The gear is further secured to the axle 360 by the locking screw 375.

Referring to Figures 20A and 21A, the second transfer turret BTT is shown as including ten bottom blank holding stations positioned around the circumference thereof and further includes an upper portion 380 and a lower portion 381. The lower portion 381 is spring biased by element 381S into engagement with the upper portion 380. In a preferred embodiment of the present invention the upper portion 380 may be constructed of nylatron and the lower portion 381 may be constructed of steel.

The upper portion 380 of the second transfer turret BTT includes a plurality of conduits 380C which project upwardly and radially outwardly. An "O" ring $OR_1$ is positioned adjacent to and concentric with the ends of each conduit 380C to effect a better seal and permit a more accurate transfer. As illustrated in Figure 20A, the conduits 380C are in communication with a manifold or distributor 382 from the initial tangential pick-up of a bottom blank BD from the anvil BAR to a point just prior to the tangential discharge of the bottom blank. The manifold or distributor 382 is connected to a vacuum line 383 which supplies a source of vacuum to hold the bottom blank BD adjacent the second transfer turret BTT during a portion of its rotation.

As illustrated in Figure 20A, the upper portion 380 of the second transfer turret BTT includes a substantially flat peripheral area 380A on which a bottom blank BD may be positioned. The "O" rings $OR_1$ are positioned one at each of the areas 380A located around the circumference of the second transfer turret BTT adjacent to and concentrically with the ends of the conduits 380C to provide positive seals for enhancing the transfer of the blanks between turrets and ultimately to the mandrels FM. The

"O" rings OR are positioned by cementing or the like in annular surface grooves formed in the surface of the peripheral areas 380A and project slightly outwardly therefrom. The peripheral areas 380A and the "O" rings $OR_1$ comprise the holding stations for the bottom blanks BD on the turret BTT.

The lower portion 381 of the second transfer turret includes a manifold or distributor 382 positioned on a portion of the upper surface thereof. Further, the lower portion 381 includes a second manifold or distributor 384 which is in communication with the conduits 380C at the tangential discharge point of the bottom blanks BD. The manifold 384 is thus vented to atmosphere at the time of transfer to assure the transfer of the bottom blank BD from the second transfer turret to the final forming mandrel FM the latter being provided with a similar vacuum holding means as illustrated in Figure 20A.

The lower portion 381 is prevented from rotation relative to the gramework F by means of a pin 385. Therefore, since the lower portion 381 is held stationary and the upper portion 380 rotates about the axle, the manifold or distributor 382 is accurately positioned to communicate the source of vacuum to the blank BD from the anvil BAR to a point adjacent to the discharge of the bottom blanks. Further, holding the lower portion 381 stationary relative to the upper portion 380 ensures the accurate alignment of the manifold or distributor 384 to vent the conduits 380C to atmosphere at the discharge point of the bottom blank BD from the second transfer turret BTT.

As illustrated in Figure 21A, the upper portion of the manifold 380 is mounted on an axle 387 and is held stationary thereto by means of a washer 387S and a threaded nut 387N. Further, the upper portion 380 of the second transfer turret BTT is positioned on a flange 387F which accurately positions the upper portion 380 relative to anvil BAR and the final forming mandrels FM.

The lower portion 381 of the second transfer turret BTT is mounted adjacent the axle 387 but is held stationary with respect thereto by means of the pin 385 which is positioned in a portion of the framework F. In addition, the axle 387 is mounted in bearing units 388 and 389 which are securely positioned in the framework housing $F_1$. The framework housing $F_1$ is secured to the framework F by a plurality of bolts $B_1$ and $B_2$ which prevent rotation of the framework housing $F_1$. A threaded nut 390 is positioned on the axle 387 and accurately positions the axial displacement of the second transfer turret BTT relative to the framework F.

Positioned adjacent the lowermost portion of the axle 387 is a gear 391 which is keyed to the axle by member 392. It should be noted that the gear 391 is constructed to be the same size as the gear 374 and is in meshing engagement therewith. Further, the lowermost end of the axle 387 is coupled to a gear reducer which in turn may be coupled to a common drive element which may supply power to the entire container forming machine.

Operation Of The Preferred Embodiment

In the preferred embodiment of the apparatus and method for severing and transferring bottom blanks from a web feed roll to a work station the bottom strip stock BSS is fed between the pinch rollers 301, 302, which may be covered with polyurethane, and tend to pull the bottom strip stock BSS (web) from the web roll. The bottom strip stock BSS is fed around a stationary guide 303 and thereafter passes between an anvil turret BAR and a rotary die BRD where the cutter die CD severs a bottom blank BD from the bottom strip stock. The stationary guide 303 is positioned so that the bottom strip stock BSS engages the peripheral surface of the anvil BAR substantially before a bottom blank BD is severed therefrom. The manifold 366 is positioned so that the conduits 363C are supplied with vacuum

-44-

prior to the severing of the bottom blanks BD by the rotary die BRD. As the bottom strip stock BSS passes between the anvil BAR and the rotary die BRD and begins to wrap around the rotary die BRD after the bottom blanks BD are severed therefrom, the resiliency of the bottom strip stock BSS actually pops the bottom blanks BD from the bottom strip stock to the anvil BAR, in conjunction with the vacuum in the latter.

Thereafter, the scrap material is fed around the stationary guid 304 and between the pinch rollers 302, 305 which tend to pull the scrap material from the bottom blank severing apparatus.

The rotary die BRD includes five cutters CD positioned around the circumference thereof. Positioned adjacent the rotary die are two bearings 341, 342 which are engaged by cam followers 331, 332. The cam followers are positioned in a cam follower housing 334 which is engaged by jack screws 330S. The jack screws are threaded in the framework F of the bottom blank cutting apparatus and may be tightened to axially displace the cam follower housing 334 thereby exerting a force through the cam followers 331, 332 to the bearings 341, 342 to ensure proper die penetration of the bottom strip stock. As discussed hereinabove, the rotary die BRD and the cam follower housing 334 are slidably mounted on the framework F. Therefore, tightening or loosening the jack screws 330S actually displaces the cam follower housing 334 and the rotary die BRD with respect to the fixed anvil BAR.

The bottom blank BD is severed from the bottom strip stock BSS and transferred from the rotary die BRD to the anvil turret BAR. Vacuum is supplied to the anvil turret BAR to aid in the positioning of the bottom strip stock BSS on the anvil BAR and to aid in the transfer of the bottom blank BD and to retain the bottom blank on the circumferential surface of the anvil turret BAR through an arc of approximately 180°. An "O" right OR is positioned adjacent to and concentric with the ends of each conduit 363C to effect a better seal and permit a more accurate transfer.

The bottom blanks BD are tangentially transferred from the anvil turret BAR to the second transfer turret BTT. At the point and time of tangential transfer the vacuum supplied to the conduits 363 is vented to the atmosphere by means of the opening 365A. The venting of the conduits 363C permits the transfer of the bottom blanks BD from the anvil to the second transfer turret where the bottom blanks are retained on substantially flat peripheral areas 380A by means of a vacuum supplied through conduits 380C. The bottom blanks BD are held on the circumferential surface of the second transfer turret BTT through an arc of approximately 180° by means of the vacuum supplied through the vacuum line 383, the manifold or distributor 382 and the conduits 380C. The vacuum supplied to the conduits 380C is terminated just prior to the tangential transfer of the bottom blanks BD from the second transfer turret BTT to the final forming mandrels FM. At the point and time of transfer of the bottom blank BD to the final forming mandrels FM the conduits 380C are vented to atmosphere to ensure the tangential transfer of the bottom blanks BD to the final forming mandrels FM by means of the vacuum present in the latter which thereafter retains the bottom blanks on the said mandrels.

Rotational power is supplied to the bottom blank severing apparatus through a gear reducer which is coupled to the axle 387. The gear 391 is keyed to the axle 387 and rotates therewith. Further, the gear 374 is keyed to the axle 360 and is in meshing engagement with the gear 391. Since the gear 374 is equal in size to the gear 391, the rotational speed of the anvil BAR is equal to the rotational speed of the second transfer turret BTT. However, since the anvil BAR is approximately one-half the size of the second transfer turret BTT, the peripheral speed of anvil turret BAR is less than the peripheral speed of the second transfer turret BTT. This permits the narrow spacing requirements between the bottom blanks BD occasioned by the low scrap configuration of the rotary cutter BRD to be amplified to a compatible spacing with the bottom blank holding stations on the circumferential surface of the second transfer turret BTT. This ultimate spacing between the blanks BD and the peripheral velocity thereof on the circumferential surface of the second transfer turret BTT is selected to be completely compatible with the spacing between and transitory velocity of the final forming mandrels FM. Thus, the cut blanks BD are fed continuously and accurately from a closely spaced, low scrap condition at a first velocity to an increased spacing and second velocity compatible with the spacing and velocity of the transitory finishing mandrels.

The gear 370 is keyed to the axle 360 and is in meshing engagement with the gear 352. The size of the gear 352 and is designed so that the rotational speed of the rotary die BRD is approximately twice the rotational speed of the anvil turret BAR and the second transfer turret BTT. As previously discussed, the rotary die BRD includes five cutter dies CD positioned around the circumference thereof while the anvil turret BAR has ten blank holding positions about its circumference. The diameter of the rotary die is approximately one-half the diameter of the anvil and approximately one-fourth the diameter of the second transfer turret, respectively. Therefore, since the rotational speed of the rotary die BRD is approximately twice the rotational speed of the anvil BAR the cutter dies CD align with the greater number of bottom blank positions spaced around the circumference of the anvil turret BAR and accurately and tangentially transfer a bottom blank from the rotary die to the anvil.

-47-

In summary, the bottom blank severing apparatus and method disclosed in the present invention continuously supplies a bottom strip stock to a rotary cutting die and effects a tangential transfer to a rotary anvil. Thereafter, the bottom blanks are tangentially transferred from the anvil to a second transfer turret. Subsequently, the bottom blanks are continuously tangentially transferred from the second transfer turret to a final forming mandrel FM which is supplied with vacuum to retain the bottom blanks thereon. The peripheral speed of the second transfer turret BTT and spacing of the holding positions thereon are correlated with the transitory speed and spacing, respectively, of the final forming mandrels FM which are positioned on a chain and are continuously moved past the transfer point for bottom blanks BD carried on the transfer turret BTT. The mandrels subsequently and continuously translate through a cylindrical blank transfer point, a bottom banger assembly, a shrink oven, and a bottom iron.

Thereafter, the finished containers on the mandrels FM are removed from the mandrels and may be processed through a top curl assembly and thence out through a discharge chute to complete the container-making process.

It should be understood that the apparatus and method for providing bottom blanks for containers in a manufacturing process of the present invention may be modified as would occur to one of ordinary skill in the art without departing from the spirit and scope of the present invention.

- 48 -

THE CLAIMS

1. Apparatus for forming and transferring a series of bottom blanks from a severing station to individual transitory work stations at a velocity and spacing compatible with that of said work stations comprising:

means for severing and translating bottom blanks from a web at a first spacing and velocity minimizing scrap remaining in the web;

transfer means for receiving severed bottom blanks from said severing and translating means at an increased velocity and spacing compatible with that of said work stations; and

means coordinated with said work stations and said transfer means for transferring said severed bottom blanks from said transfer means onto respective ones of said work stations.

2. Apparatus for forming and transferring a series of bottom blanks from a severing station to individual transitory work stations at a velocity and spacing compatible with that of said work stations comprising:

rotary die means cooperating with a rotary anvil turret means for continuously severing and translating bottom blanks from a web continuously fed therebetween at a first spacing and velocity minimizing scrap remaining in said web;

rotary transfer turret means for receiving severed bottom blanks from said rotary anvil turret means at an increased velocity and spacing compatible with that of said work stations; and

means coordinated with said stations and said rotary turret means for transferring said severed bottom blanks from said rotary transfer means onto respective ones of said work stations.

3. An apparatus according to claim 2 , wherein said rotary anvil turret means and said rotary transfer turret means are driven at substantially a one-to-one ratio and being of different diameters such that the velocity and spacing of said bottom blanks respectively increase at the time of transfer from said rotary turret means to said rotary transfer turret means to a velocity and spacing compatible with said work stations.

4. An apparatus according to claim 2, wherein said rotary die means further includes a cutting die positioned on the periphery thereof and a compressed air supply means to eject said bottom blanks from said cutting die.

5. An apparatus according to claim 2, wherein said rotary anvil turret means is cylindrical and includes a plurality of bottom blank positions spaced around the circumference thereof and vacuum supply means for applying vacuum to said bottom blank positions to hold said bottom blanks thereon.

6. An apparatus according to claim 5, wherein said vacuum supply means is connected to said bottom blank positions throughout a portion of the rotation of said rotary anvil turret means to hold said web adjacent to said rotary anvil turret means to ensure accurate severing of said bottom blanks and to effect a transfer to said rotary transfer turret means.

7. An apparatus according to claim 5, wherein said vacuum supply means of said rotary anvil turret means is vented to atmosphere at the point of transfer of said bottom blanks from said rotary anvil turret means to said rotary transfer turret means.

8. An apparatus according to claim 2, wherein said rotary transfer turret means is cylindrical and includes a plurality of bottom blank positions spaced around the circumference thereof and vacuum supply means for applying vacuum to said bottom blank positions to hold said bottom blanks thereon.

9. An apparatus according to claim 8, wherein said vacuum supply means is connected to said bottom blank positions throughout a portion of the rotation of said rotary transfer turret means to effect a timed pick-up of bottom blanks from said rotary anvil turret means and subsequent release thereof onto respective ones of said work stations.

10. An apparatus according to claim 8, wherein said vacuum supply means of said rotary transfer turret means is vented to atmosphere at the point of transfer of said bottom blanks onto respective ones of said work stations.

11. An apparatus according to claim 5, 6, 7, 8, 9 or 10 wherein said rotary die menas further includes a cutting die positioned on the periphery thereof and a compressed air supply means to eject said bottom blanks from said cutting die.

12. An apparatus according to claim 5, 6 or 7 wherein said rotary transfer turret means is cylindrical and includes a plurality of bottom blank positions spaced around the circumference thereof and vacuum supply means for applying vacuum to said bottom blank positions to hold said bottom blanks thereon.

13. An apparatus according to claim 5, 6 or 7, wherein said vacuum supply means is connected to said bottom blank positions throughout a portion of the rotation of said rotary transfer turret means to effect a timed pick-up of bottom blanks from said rotary anvil turret means and subsequent release thereof onto respective ones of said work stations.

14. An apparatus according to claim 5, 6 or 7, wherein said vacuum supply means of said rotary transfer turret means is vented to atmosphere at the point of transfer of said bottom blanks onto respective ones of said work stations.

15. An apparatus for supply and transferring a series of work pieces from a first station to individual transitory work stations at a velocity and spacing compatible with that of said work stations comprising:

     means for supplying work pieces at a first spacing and velocity;

     transfer means for receiving said work pieces from said supply means at an increased velocity and spacing compatible with that of said work stations; and

     means coordinated with said work stations and said transfer means for transferring said work pieces from said transfer means onto respective ones of said work stations.

FIG. 1

FIG. 5A

FIG. 5B

FIG. 2A

FIG. 2

FIG. 4

HEAT TUNNEL

0056661

FIG. 3

*FIG. 6A*

*FIG. 6B*

*FIG. 7*

FIG. 8A

FIG. 8B

FIG. 11

FIG. 9

FIG. 10

FIG. 10A

FIG. 12

BVH

BTT

BRD  BAR  BTV  BVD2  BVD1  BTP  GR  VH

BSS

BD  BVDI  FM  BD

BTP  BTV

BVS

44

46

100

FM  SWI

SWIA  SWIA

BIA  BI

*FIG. 11A*

*FIG. 11B*

BIA  BI

8/24

0056661

0056661

TO TCT

MAG

102

104

106

100

110

102

112

100

108

FIG. 13

122

118

120

116

102

114

114R

100

116A

124

102A

114A

114R

100A

108A

FIG. 15

FIG. 14

FIG. 16A

FIG. 16B

FIG. 16C

FIG. 17A

0056661

FIG. 17B

FIG. 17C

FIG. 18

40A

F2

40B M2

10A3

CS 210

210D

10A

206

FIG. 19

VACUUM

FM

380C

OR₁

BD

VACUUM

380C

384

FM

OR₁

380A    380C

380

F

VACUUM

BD

FM

382

382

387

387N

387S

380

380

OR₁    380A

380C

382

380C

365A

OR'

366

380C

OR₁

380A

380

BTT

FIG 20A

FIG. 20B

FIG. 20C

FIG. 21A

FIG. 21B

FIG. 21C

0056661

FIG. 22